# EUROPEAN PATENT APPLICATION

(11) **EP 1 361 324 A2**
(43) Date of publication of application: **12.11.2003**
(21) Application number: 03252874.7
(22) Date of filing: 08.05.2003
(51) Int. Cl.: E05B 19/00, E05B 19/22, B60R 16/00, G05B 23/02

(54) **Key with display capability, display method, and display program**

(30) Priority: 10.05.2002 JP 2002136245; 25.12.2002 JP 2002375585
(71) Applicant: SEIKO EPSON CORPORATION, Tokyo 160-0811 (JP)
(72) Inventor: Ishii, Ryo, c/o Seiko Epson Corporation, Suwa-shi, Nagano-ken 392-8502 (JP); Sugimoto, Fujikazu, c/o Seiko Epson Corporation, Suwa-shi, Nagano-ken 392-8502 (JP); Watanabe, Yusuke, c/o Seiko Epson Corporation, Suwa-shi, Nagano-ken 392-8502 (JP); Kurumisawa, Takashi, c/o Seiko Epson Corporation, Suwa-shi, Nagano-ken 392-8502 (JP)
(74) Representative: Sturt, Clifford Mark

(57) **Abstract**

Owning a mechanical key alone does not allow knowing whether an automobile, dwelling, etc. is locked or unlocked. Furthermore, if a plurality of keys are owned, it is difficult to identify at a glance a key for a particular object. Furthermore, when a toll parking is used, a parking time has been estimated by taking notes on the time when the automobile is parked, which has caused a laborious work. Furthermore, even if an on-vehicle GPS unit is mounted, it has been necessary to take notes on map information of a surrounding area before going out of the automobile. Accordingly, the present invention provides a key with display capability that allows information relating to an object to be grasped even from a location remote from the object. Display means for displaying an image and receiving means for receiving information from an object that requires a key are provided, and information relating to the object is received from the object and then displayed.

## Description

The present invention relates to a key with display capability, a display method, and a display program, used for locking an automobile or a dwelling.

The present invention also relates to a wearable computer, an automobile information management method, a dwelling information management method, an automobile information management program, and a dwelling information management program that are used for management of an automobile or a dwelling.

Conventionally, mechanical keys are used for locking automobiles or dwellings, and for starting automobiles. Furthermore, wireless keys are used for some automobiles.

More specifically, according to a technique disclosed in Patent Document 1, a pager is disposed in an automobile, a microphone or a vibration sensor senses sound or vibration of the pager and sends a corresponding signal to an operation circuit, an engine-operation code of an ignition key is received by a relay box, and then the operation circuit operates to start the engine of the automobile. This allows the engine of the automobile to be operated regardless of buildings and distance. That is, the technique disclosed allows the engine of the automobile to be started and stopped using the pager for remote-control reception.

Furthermore, according to a technique disclosed in Patent Document 2, in a wrist device in which a module and a battery are contained in a wrist-wearable case, the rechargeable battery is disposed below the module, and an external terminal is disposed on the opposite side of an antenna across the module. Accordingly, the wrist device has a small planar shape, and minimizes noise that comes from the external terminal to the antenna.

Meanwhile, densification in dot-matrix liquid-crystal displays has come to allow fine display of images by small devices.

More specifically, in a technique disclosed in Patent Document 3, a transistor, a reflecting electrode connected to the transistor, and an interlayer insulating film below the reflecting electrode are provided on a substrate. The interlayer insulating film includes a first silicon oxide film, a second silicon oxide film, formed over the first silicon oxide film by polycondensation of a silicon compound and hydrogen peroxide, and a third silicon oxide film formed over the second silicon oxide film. Accordingly, in a reflective liquid crystal panel, the reflecting electrode exhibits optimal reflection characteristics, allowing bright, high-quality reflective display with a wide viewing angle.

Furthermore, in a technique disclosed in Patent Document 4, in an electro-optical apparatus, an electro-optical material is held in a region enclosed by a sealing member between a pair of first substrate and second substrate, and conductive layers are laminated on the first substrate. The sealing member is separated into a portion that include spacers and a portion that does not include spacers, and wires formed of conductive layers are disposed between the portion of the sealing member, not including spacers, and the substrate. Accordingly, the wires formed of conductive layers, laminated on one of the substrates holding the electro-optical material, are prevented from being cut or shortcircuited due to spacers.

### [Patent Document 1]

Japanese Unexamined Patent Application Publication No. Hei-9-158817

### [Patent Document 2]

Japanese Unexamined Patent Application Publication No. 2002-98777

### [Patent Document 3]

Japanese Unexamined Patent Application Publication No. 2001-100187

### [Patent Document 4]

Japanese Unexamined Patent Application Publication No. 2001-56651

However, owning a mechanical key alone does not allow knowing whether an automobile, dwelling, etc. is locked or unlocked. Furthermore, if a plurality of keys are owned, it is difficult to identify at a glance a key for a particular object. Furthermore, when a toll parking is used, a parking time has been estimated by remembering or taking notes on the time when the automobile is parked, which has caused a laborious work. Furthermore, even if an on-vehicle GPS (Global Positioning System) unit is mounted, it has been necessary to take notes on map information of a surrounding area before going out of the automobile.

Furthermore, when the automobile is operated using a remote controller such as an engine starter or a security controller, a remote controller currently available does not allow operation status to be continuously checked. Furthermore, responses to conditions that are set in the automobile, such as unlocking/locking by a key and on/off of the engine, can only be judged from sounds that are generated from the remote controller or the automobile.

The present invention has been made in view of the situation described above, and an object thereof is to provide a key with display capability, a display method, and a display program that allow information relating to an object to be grasped even from a location remote from the object.

Another object of the present invention is to provide a wearable computer, an automobile information management method, a dwelling information management method, an automobile information management program, and a dwelling information management program that allow information relating to an automobile or a dwelling to be grasped even at a remote location.

In order to achieve the above objects, the present invention, in one aspect thereof, provides a key with display capability, including display means for displaying an image; and receiving means for receiving information from an object that requires the key; wherein information relating to the object is received from the object and displayed.

In the key with display capability, preferably, the receiving means is capable of receiving a plurality of types of information and therefore compatible with a plurality of types of objects.

Furthermore, in the key with display capability, compatible with a plurality of types of objects, the display means may display an object-identifying image for identifying the plurality of types of objects and display an image other than the object-identifying image as required.

In the key with display capability, the display means may display whether the object is unlocked or locked.

In the key with display capability, the display means may also display a time elapsed since locking.

In the key with display capability, the display means may also display an alert when the object satisfies a predetermined condition.

The key with display capability may include means for issuing an alarm, wherein the alarm is issued when the object is left behind unlocked.

In the key with display capability, the display means may also display current position data of the object or map data of an area around the object.

The key with display capability may further include direction-detecting means for detecting a direction of the object, wherein data of the direction is displayed.

The key with display capability may further include a rechargeable battery as a power source for allowing display by the display means, wherein the rechargeable battery is charged while the object is active.

The present invention, in another aspect thereof, provides a display method for displaying an image on a key with display capability, wherein information relating to an object that requires the key is received from the object, and the information is displayed.

The present invention, in another aspect thereof, provides a display program for allowing a computer to execute processing for displaying an image on a key with display capability, the processing including a step of receiving information relating to an object that requires the key from the object; and a step of displaying the information.

The present invention, in another aspect thereof, provides an automobile management system including a wearable computer and an automobile that carries out data communication with the wearable computer, wherein the automobile includes at least one sensor for detecting status information of at least one part of the automobile; determination means for comparing the status information output by the sensor with a determination condition prestored in a storage unit, thereby determining whether the determination condition is satisfied; and first communication means for sending a result of the determination to the wearable computer; and wherein the wearable computer includes second communication means for receiving the result of the determination from the automobile; and display means for displaying predetermined information in accordance with the result of the determination received.

In the automobile management system, the wearable computer may further include alerting means for issuing a predetermined alert on behalf of the display means based on the result of the determination received.

Also, the automobile management system may be such that the automobile may further include ID generating means for generating an ID code, the first communication means further sends the ID code generated by the ID generating means to the wearable computer, and the second communication means further receives the ID code, and sends the ID code together when sending data to the automobile.

The present invention, in another aspect thereof, provides a wearable computer that is used in an automobile management system including the wearable computer and an automobile that carries out data communication with the wearable computer, the wearable computer including communication means for receiving a result of a determination that is made by comparing status information of at least one part of the automobile, output by at least one sensor of the automobile, with a determination condition prestored in a storage unit; and display means for displaying predetermined information in accordance with the result of the determination received.

The present invention, in another aspect thereof, provides an automobile including at least one sensor for detecting status information of at least one part of the automobile; determination means for comparing the status information output by the sensor with a determination condition prestored in a storage unit, thereby determining whether the determination condition is satisfied; and communication means for sending a result of the determination to a wearable computer having display means for displaying predetermined information in accordance with the result of the determination.

The present invention, in another aspect thereof, provides an automobile information management method for managing, using a wearable computer, status information of an automobile that carries out data communication with the wearable computer, wherein the automobile detects status information of at least one part of the automobile, compares the status information with a determination condition prestored in a storage unit, thereby determining whether the determination condition is satisfied, and sends a result of the determination to the wearable computer, and wherein the wearable computer receives the result of the determination from the automobile, and displays predetermined information in accordance with the result of the determination received.

The present invention, in another aspect thereof, provides an automobile information management program for allowing a wearable computer to execute processing for managing status information of an automobile that carries out data communication with the wearable computer, the processing including a communication step of receiving a result of a determination that is made by comparing status information output by at least one sensor of the automobile, the status information relating to a part of the automobile, with a determination condition prestored in a storage unit; and a display step of displaying predetermined information in accordance with the result of the determination received.

The present invention, in another aspect thereof, provides a dwelling management system including a wearable computer and a dwelling management apparatus that carries out data communication with the wearable computer, wherein the dwelling management apparatus includes at least one sensor for detecting status information of a dwelling; determination means for comparing the status information output by the sensor with a determination condition prestored in a storage unit, thereby determining whether the determination condition is satisfied; and first communication means for sending a result of the determination to the wearable computer; and wherein the wearable computer includes second communication means for receiving the result of the determination from the dwelling management apparatus; and display means for displaying predetermined information in accordance with the result of the determination received.

The present invention, in another aspect thereof, provides a wearable computer that is used in a dwelling management system including the wearable computer and a dwelling management apparatus that carries out data communication with the wearable computer, the wearable computer including communication means for receiving, from the dwelling management apparatus, a result of a determination that is made by comparing status information of at least one part of a dwelling, output by at least one sensor of the dwelling management apparatus, with a determination condition prestored in a storage unit; and display means for displaying predetermined information in accordance with the result of the determination received.

The present invention, in another aspect thereof, provides a dwelling management method for carrying out dwelling management using a wearable computer and a dwelling management apparatus that carries out data communication with the wearable computer, wherein the dwelling management apparatus detects status information of a dwelling, compares the status information of the dwelling with a determination condition prestored in a storage unit, thereby determining whether the determination condition is satisfied, and sends a result of the determination to the wearable computer, and wherein the wearable computer receives the result of the determination from the dwelling management apparatus, and displays predetermined information in accordance with the result of the determination received.

The present invention, in another aspect thereof, provides a dwelling management program for allowing a wearable computer to execute processing for managing status information of a dwelling in a dwelling management system including the wearable computer and a dwelling management apparatus that carries out data communication with the wearable computer, the processing including a communication step of receiving, from the dwelling management apparatus, a result of a determination that is made by comparing status information of at least one part of the dwelling, output by at least one sensor of the dwelling management apparatus, with a determination condition prestored in a storage unit; and a display step of displaying predetermined information in accordance with the result of the determination received.

Embodiments of the present invention will now be described by way of further example only and with reference to the accompanying drawings, in which:-
Fig. 1 Block diagram of a first embodiment of the present invention.
Fig. 2 Illustration showing example screens in the first embodiment.
Fig. 3 Flowchart showing an operation of the first embodiment.
Fig. 4 Diagram showing the configuration of a wearable computer according to a second embodiment.
Fig. 5 Diagram showing the configuration of an automobile according to the second embodiment.
Fig. 6 Flowchart showing processes for authentication, executed between the wearable computer and the automobile according to the second embodiment.
Fig. 7 Flowchart showing processes for communication, executed between the wearable computer and the automobile according to the second embodiment when the engine is started.
Fig. 8 Flowchart showing a modification of the second embodiment.
Fig. 9 Flowchart showing processes for activating security, executed between the wearable computer and the automobile according to the second embodiment.
Fig. 10 Flowchart showing processes for activating a turbo timer, executed between the wearable computer and the automobile according to the second embodiment.
Fig. 11 Flowchart showing processes for exchanging traveling-distance data and gasoline-amount data, executed between the wearable computer and the automobile according to the second embodiment.
Fig. 12 Flowchart showing processes for exchanging traveling-distance data and gasoline-amount data, executed between the wearable computer and the automobile according to the second embodiment.
Fig. 13 Flowchart showing processes for exchanging an engine-oil replacement message, executed between the wearable computer and the automobile according to the second embodiment.
Fig. 14 Table of conversion between traveling distance and replacement cycle, stored in a ROM 320.
Fig. 15 Diagram showing an example of a replacement-schedule message that is displayed on a display panel 140.
Fig. 16 Diagram showing an example of a replacement-recommendation message that is displayed on the display panel 140.
Fig. 17 Flowchart showing a modification of the second embodiment.
Fig. 18 Flowchart showing processes for exchanging an engine-oil replacement message, executed between the wearable computer and the automobile according to the second embodiment.
Fig. 19 Flowchart showing processes for exchanging an ATF replacement message, executed between the wearable computer and the automobile according to the second embodiment.
Fig. 20 Flowchart showing processes for exchanging a window-washer-fluid replacement message, executed between the wearable computer and the automobile according to the second embodiment.
Fig. 21 Flowchart showing processes for exchanging a battery replacement message, executed between the wearable computer and the automobile according to the second embodiment.
Fig. 22 Diagram showing the configuration of a dwelling management apparatus according to a third embodiment.
Fig. 23 Flowchart showing processes for authentication and unlocking, executed between a wearable computer and the dwelling management apparatus according to the third embodiment.
Fig. 24 Flowchart showing processes for exchanging an image captured by a monitoring camera, executed between the wearable computer and the dwelling management apparatus according to the third embodiment. 1. Configuration of a First Embodiment

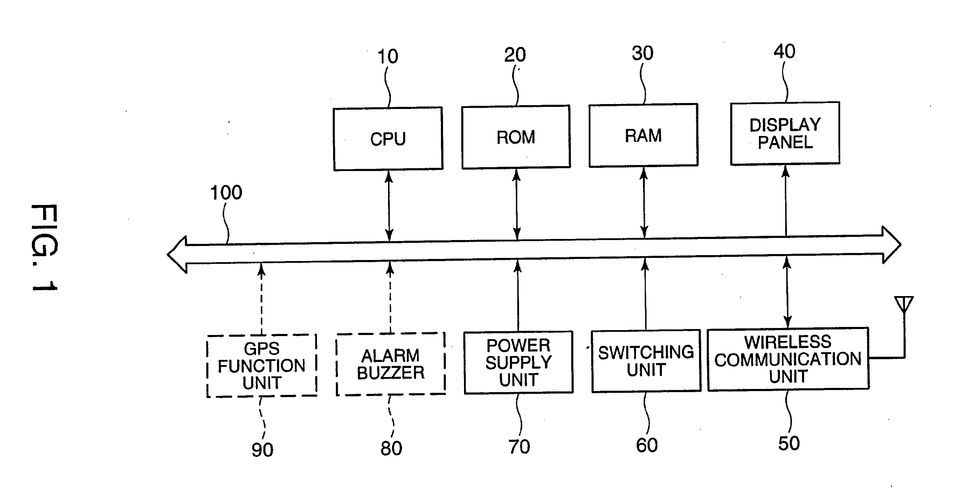

The configuration of a key with display capability according to a first embodiment of the present invention will be described with reference to Fig. 1.

Referring to Fig. 1, a CPU 10 controls each component of the key, and is capable of calculating time. A ROM 20 allows programs, parameters, etc. for controlling the CPU 10 to be written thereto. A RAM 30 is used as a work memory for the CPU 10. A display panel 40 is implemented typically by a dot-matrix liquid-crystal display panel. A wireless communication unit 50 exchanges key information and other information by wireless by way of radio waves or infrared rays. A switching unit 60 includes two switches; namely, a selecting switch 65 for selecting display content and an unlocking/locking switch 66 for unlocking/locking by wireless. A power supply unit 70 includes a rechargeable battery, which is directly charged through a key cylinder of an automobile or other objects.

An alarm buzzer 80 and a GPS function unit 90 are additionally provided as required, as will be described later. A bus line 100 connects the components with each other.

### 2. Operation of the First Embodiment

This embodiment is typically applied to a key for an automobile, which is used for starting and stopping the engine and unlocking/locking a door.

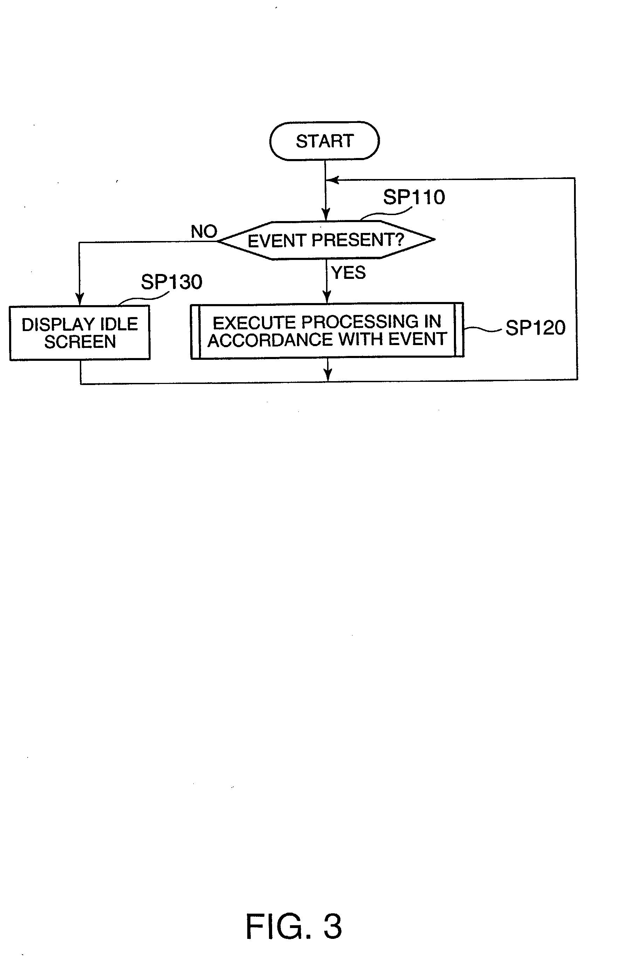

When a reset operation occurs after a battery replacement or a battery recharging, a routine shown in Fig. 3 is entered. In step SP110, it is determined whether an event is present.

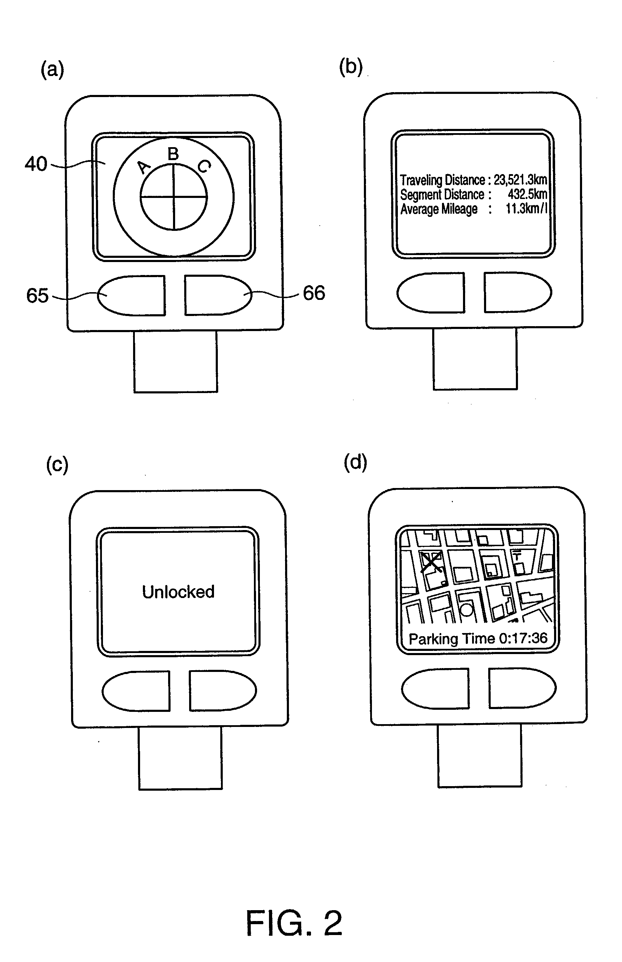

If step SP110 evaluates to "NO", that is, if no event is detected, the routine proceeds to step SP130. In step SP130, an idle screen is displayed, and the routine returns to step SP110. The idle screen displays a design or an image (including text) that is convenient for recognizing the key and identifying the automobile, such as an emblem of the automobile or a type of the automobile, on the display panel 40 (part (a) in Fig. 2). This allows the particular key to be readily recognized from among a large number of keys.

On the other hand, step SP110 evaluates to "YES", that is, if an event is detected, the routine proceeds to step SP120. In step SP120, processing in accordance with the event is executed, and the routine returns to step SP110. Types of events include starting/stopping of the engine, unlocking/locking of a door, and pressing of the selecting switch 65.

### (1) Starting/Stopping of the Engine

The engine is started/stopped by inserting the key into the key cylinder and causing a mechanical rotation with the key. When the engine is started, the rechargeable battery is charged through the key cylinder. When the engine is stopped, information relating to the automobile, such as a traveling distance, is transmitted to the key with display capability according to this embodiment via the wireless communication unit 50 or directly through the key cylinder. At this time, information indicating an unlocked state is also transmitted. Accordingly, an unlocked state is detected when locking is forgotten.

### (2) Unlocking/Locking of a Door

A door can be unlocked/locked by pressing the unlocking/locking switch 66 as well as by causing a mechanical rotation with the key. When the door is unlocked/locked, information indicating an unlocked/locked state is displayed on the display panel 40 for a predetermined period of time. Even while the information is in display, an event associated with pressing of the selecting switch 65 can be handled by interrupt processing. Furthermore, an alarm buzzer 80 that works in cooperation with the wireless communication unit 50 checking the presence/absence of radio wave or the like may be provided so that a buzzer sound will be output when the automobile is left behind unlocked. This serves as an anticrime measure.

### (3) Pressing of the Selecting Switch

When the selecting switch 65 is pressed, content in accordance with an item selected and a timing of the press is displayed, such as a traveling distance and related information (part (b) in Fig. 2) or information indicating an unlocked/locked state (part (c) in Fig. 2). The traveling distance and related information that are displayed include, for example, a distance traveled since last refueling (segment distance) and a mileage calculated from the segment distance. The information indicating an unlocked/locked state may be displayed as "OPEN/CLOSE".

Furthermore, when the engine is stopped, in cooperation with an on-vehicle GPS apparatus, the key obtains map data of an area around where the automobile is parked. When the selecting switch 65 is pressed a predetermined number of times, the map data is displayed on the display panel 40, and the parking point is indicated by, for example, a "×" sign (part (d) in Fig. 2). This serves to save the work of taking notes on a map around the parking point in advance. Furthermore, a time elapsed since the automobile was parked (parking time) is displayed below the map. This improves the convenience of using a toll parking lot.

### 3. Modifications

The present invention is not limited to the embodiment described above, and various modifications including those described below are possible, which are all within the scope of the present invention.
(1) Although a mechanical key is used for unlocking/locking in the embodiment described above, it is possible to allow unlocking/locking by a wireless key alone. In that case, a single key with display capability can be used for a plurality of automobiles or dwellings. For that purpose, an image that allows identification of each automobile or dwelling is displayed, and other information, such as information indicating an unlocked/locked state, is displayed as required.
(2) Although map data of an area around a parking point is displayed in cooperation with an on-vehicle GPS unit in the embodiment described above, alternatively, a GPS function unit 90 (Fig. 1) may be provided in the key itself for displaying a current position so that direction of and distance to the parking point can be recognized. In that case, the direction of an electromagnetic wave transmitted from the automobile may be detected by a direction sensor having a directive antenna, without limitation to the GPS unit. This is particularly effective in a case where only a wireless key is used, since the size and shape of the key itself does not matter.
(3) Although the key is used for an automobile (including a motorbike and a bicycle) in the embodiment described above, the key may be used for a dwelling. In that case, it is effective to display information indicating an unlocked/locked state and information that allows identification of the key. Furthermore, preferably, a time of locking is recorded at the dwelling side and checked for matching with a record of locking time on the key side, and an alert, such as flashing, is displayed depending on the result of the check. This allows the user to confirm that the dwelling has not been unlocked by a third party. This is preferable for security, particularly if the user lives alone.

Programs for implementing the functions of the processing units for executing the processes described above may be separate program modules or an integrated program module. The functions may be implemented entirely or partially in hardware using logic circuits. Each program module may run within an existing application program, or as an independent program. A computer program for implementing the present invention as described above may be recorded on a computer-readable recording medium so that the processes will be executed by reading the program out of the recording medium into a computer. Alternatively, the program may be used by downloading it via a network into a memory of a computer.

A "computer-readable recording medium" refers to a storage device, for example, a portable medium such as a flexible disk, a magneto-optical disk, a ROM, or a CD-ROM, or a hard disk included in a computer. Furthermore, a "computer-readable recording medium" may also refer to a device that holds a program for a certain period of time, such as a volatile memory (RAM) in a computer that serves as a server or a client that exchanges the program via a network such as the Internet or a communication line such as a telephone circuit.

Furthermore, the program may be transmitted from a computer that stores the program in a storage device to another computer via a transmission medium or by way of waves transmitted through a transmission medium. A "transmission medium" for transmitting the program refers to a medium that allows transmission of information, for example, a communication network such as the Internet or a communication line such as a telephone circuit.

Furthermore, the program may implement only part of the functions described above. The program may also be a difference file (difference program) for implementing the functions described above in combination with a program already recorded in a computer.

### 1. Configuration of a Second Embodiment

Next, a second embodiment of the present invention will be described with reference to the drawings.

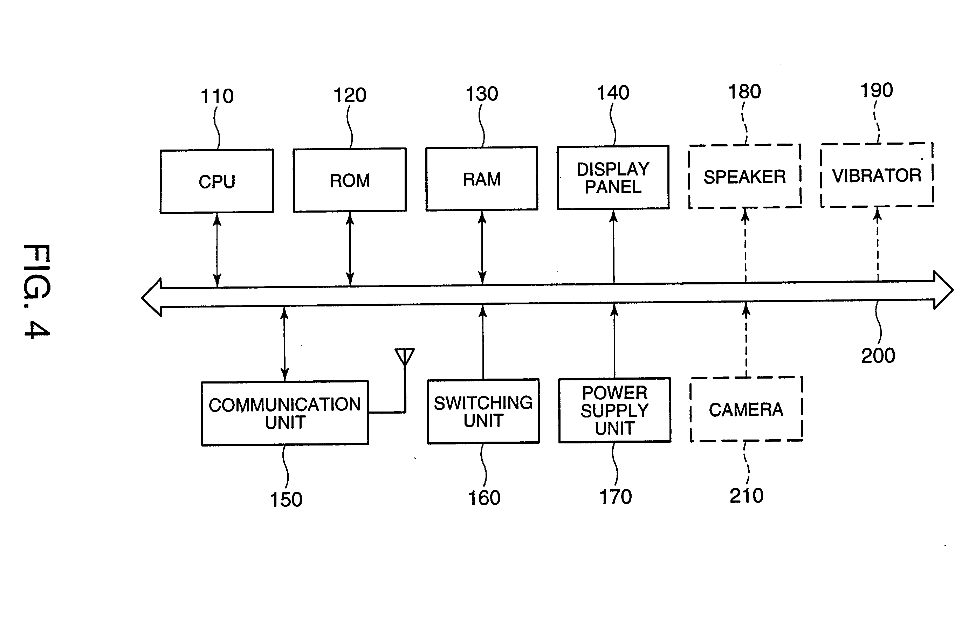

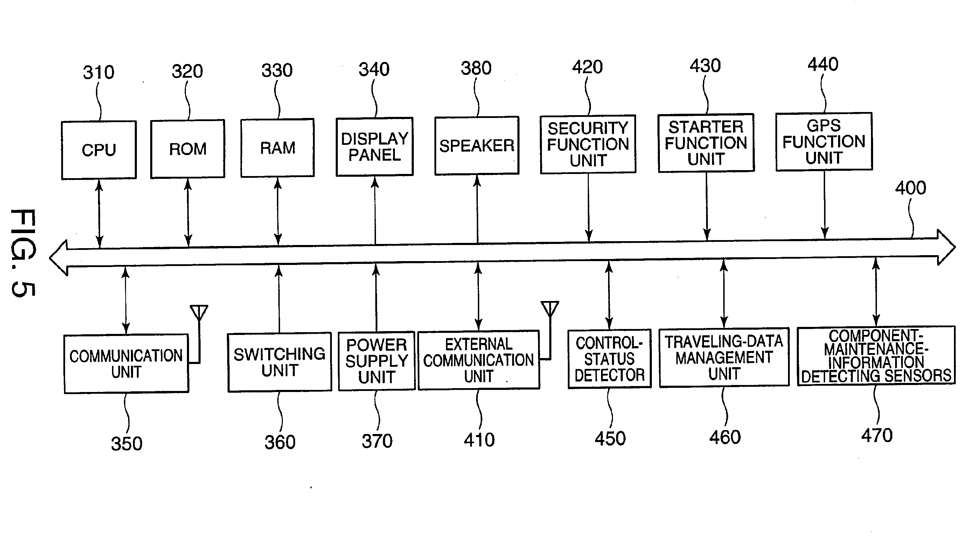

First, an automobile management system that employs a wearable computer according to this embodiment will be described. The automobile management system according to this embodiment includes a wearable computer shown in Fig. 4 and an automobile shown in Fig. 5.

The wearable computer according to this embodiment will now be described.

Fig. 4 is a diagram showing the configuration of the wearable computer according to this embodiment.

A wearable computer according to the present invention may be implemented as a key for an automobile, a dwelling, etc., a wristwatch, glasses, a pendant, a ring, a cap, a bracelet, clothing, etc. This embodiment will be described, by way of example, in the context of a wristwatch.

The wearable computer according to this embodiment includes a CPU 110, a ROM 120, a RAM 130, a display panel 140, a communication unit 150, a switching unit 160, a power supply unit 170, a speaker 180, a vibrator 190, and a camera 210, and these components are connected to each other via a bus line 200.

The CPU 110 reads programs stored in the ROM 120 and writes the programs in the RAM 130, and executes the programs to control each of the components and to perform operations and processing of data.

The ROM 120 is implemented by a device that allows data stored thereon to be electrically erased (rewritten), such as a flash memory. The ROM 120 prestores a control program and parameters for the CPU 110, more specifically, for example, an automobile-information management program and related items, which will be described later.

The RAM 130 serves as a work memory for the CPU 110, and it is implemented by a semiconductor memory that allows reading from and writing to an arbitrary address specified.

The display panel 140 serves as a display for the wearable computer according to this embodiment, and it is implemented, for example, by a dot-matrix liquid-crystal display panel.

The communication unit 150 carries out data communications with a communication unit (described later) provided in the automobile, via a wireless-LAN link or a WPAN (wireless personal area network) link.

The switching unit 160 is an operation unit that allows the user to perform operations, such as a selection of display content, on the wearable computer, and it includes a plurality of switches.

The power supply unit 170 includes a rechargeable battery that generates electric power and gets charged by itself through self-winding operation when the user swings his/her arm. Alternatively, the wearable computer may be set in a cradle (described later) provided in the automobile so that the wearable computer will be charged directly by a power source of the automobile through the cradle.

The speaker 180 is an audio output unit for outputting an alarm buzzer sound or the like.

The vibrator 190 causes the wearable computer to vibrate in response to a predetermined vibration command received.

The camera 210 is an imaging device that captures, in response to a predetermined imaging command received, an image of an object to which the wearable computer is directed by the user.

Next, the automobile in the automobile management system according to this embodiment will be described.

Fig. 5 is a diagram showing the configuration of the automobile according to this embodiment. The automobile according to this embodiment includes a CPU 310, a ROM 320, a RAM 330, a display panel 340, a communication unit 350, a switching unit 360, a power supply unit 370, a speaker 380, a vibrator 390, an external communication unit 410, a security function unit 420, a starter function unit 430, a GPS function unit 440, a control-status detector 450, a traveling-data management unit 460, and component-maintenance-information detecting sensors 470, and these components are connected to each other via a bus line 400.

The CPU 310 reads programs stored in the ROM 320 and writes the programs to the RAM 330, and executes the programs to control each of the components and to perform operations and processing of data. More specifically, the CPU 310 compares status information of components of the automobile, detected by the component-maintenance-information detecting sensors 470 (described later), with determination-condition parameters stored in advance in the ROM 320, thereby determining whether the determination conditions are satisfied, and sends the results to the wearable computer.

The ROM 320 is implemented by, for example, a read-only mask ROM or an electrically erasable (rewritable) ROM such as a flash memory. The ROM 320 prestores a control program and parameters for the CPU 310.

The RAM 330 serves as a work memory for the CPU 310, and it allows reading from and writing to an arbitrary address specified.

The display panel 340 is a display for the automobile according to this embodiment.

The communication unit 350 carries out data communications with the communication unit 150 of the wearable computer according to this embodiment. The communication unit 350 may be implemented by, for example, a wireless-link interface for a WPAN or a cradle for a direct, wired connection. If a cradle is used, it is possible to charge the wearable computer at an installation time.

The switching unit 360 is an operation unit that allows the user to perform operations, such as a selection of display content on the automobile.

The power supply unit 370 is a generating power source such as an alternator, or an on-vehicle battery power source.

The speaker 380 is an audio output unit for outputting an alarm buzzer sound or the like.

The external communication unit 410 connects to an external network such as the Internet, and carries out communications over the network.

The security function unit 420 is a security apparatus that detects an abnormal vibration of the automobile, an abnormal opening/closing of a door, and an abnormal start of the engine, and that executes processes for preventing stealing of and mischief on the automobile. More specifically, the security function unit 420 outputs a threatening sound, turns on an alert LED, and controls an immobilizer.

The starter function unit 430 starts the engine based on specifications of the number of retries for starting the engine, operating time of a cell motor, idling time, etc., and stops the engine based on setting of the turbo timer and a temperature output from a temperature sensor of the turbine.

The GPS function unit 440 calculates a current position of the automobile by communicating with GPS satellites, and displays prestored map information in association with current-position information in cooperation with a car navigation system.

The control-status detector 450 is a sensor for detecting positions of components of the automobile (vibration, position, tilt), a gear position, etc.

The traveling-data management unit 460 calculates data such as traveling distance, mileage, and remaining amount of gasoline based on data obtained from the sensors of the components of the automobile, and manages the data.

The component-maintenance-information detecting sensors 470 are sensors for detecting maintenance information of components of the automobile. More specifically, the sensors 470 include level gauge sensors for engine oil, ATF, and window-washer fluid, a viscosity sensor, a battery-voltage sensor, and sensors for in-vehicle and ambient carbon monoxide concentrations.

### 2. Operation of the Embodiment

Now, operations of the wearable computer and the automobile in the automobile management system according to this embodiment will be described with reference to the drawings.

### (1) Executing authentication and starting the engine

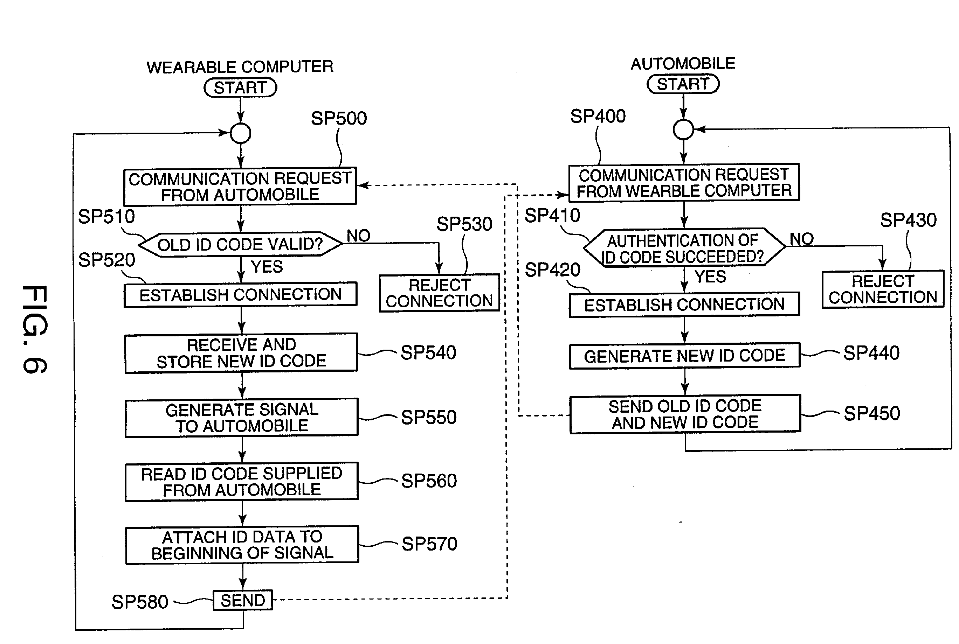

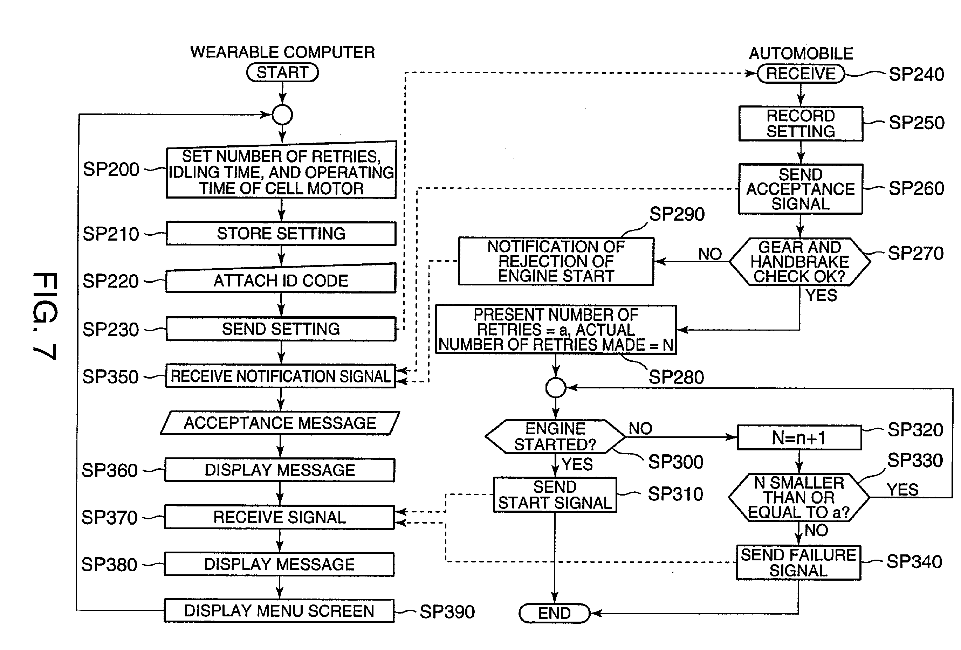

Fig. 6 is a flowchart showing processes for executing authentication between the wearable computer and the automobile, and Fig. 7 is a flowchart showing processes for carrying out communication when starting the engine.

When the number of retries for starting the engine, the operating time of the cell motor, and the idling time are set in the wearable computer (step SP200 in Fig. 7), the CPU 110 writes the setting to the RAM 130 (step SP210), adds a preset ID code (step SP220) to an engine starting signal in which the number of retries for starting the engine, the operating time of the cell motor, the idling time, etc. are specified, and sends the engine starting signal to the automobile (step SP230).

In the automobile, the CPU 310 receives the engine starting signal via the communication unit 350 (step SP400 in Fig. 6, and step SP240 in Fig. 7).

The CPU 310 executes authentication of the ID code attached to the engine starting signal (step SP410). More specifically, the CPU 310 compares the ID code attached to the engine starting signal with an ID code of the wearable computer, prestored in the ROM 320. If the ID codes match, the CPU 310 determines that the attached ID code is valid, and establishes connection (and also starts the engine in this case) (step S420). If the ID codes do not match, the CPU 310 determines that the attached ID code is not valid, and rejects connection (step SP430).

The CPU 310, when starting the engine, writes the setting to the RAM (step SP250 in Fig. 7), and sends an acceptance signal indicating acceptance of the engine starting signal to the wearable computer (step SP260). At this time, the CPU 310 generates a new ID code (step SP440 in Fig. 6), and sends the old ID code and the new ID code together with the acceptance signal (step SP450).

Then, the CPU 310 outputs a command for checking the gear and the handbrake to the control-status detector 450.

When the control-status detector 450 checks the positions of the gear and the handbrake and outputs "check OK" (Yes in step SP270 in Fig. 7), the CPU 310 reads the number of retries, the operating time of the cell motor, and the idling time that are set in the engine starting signal, and outputs these items to the starter function unit 430 (step SP290). If "check OK" is not output (No in step SP270), the CPU 310 notifies the wearable computer via the communication unit 350 that starting the engine has been rejected (step SP280). In that case, the CPU 310 generates a new ID code (step SP440 in Fig. 6), and sends the old ID code and the new ID code together with the rejection-notification signal (step SP450).

The starter function unit 430 writes the setting to the RAM, whereby the setting becomes effective.

The preset number of retries will be denoted as a, and an actual number of retries that have been made will be denoted as N.

Then, the engine is started (step SP300). When the engine is successfully started (Yes in step SP300), the CPU 310 sends a start signal via the communication unit 350 (step SP310). At this time, the CPU 310 generates a new ID code (step SP440 in Fig. 6), and sends the old ID code and the new ID code together with the start signal (step SP450).

If the engine fails to be started (No in step SP300 in Fig. 7), N is incremented by 1. If the value of n is smaller than or equal to the preset value a (Yes in step SP330), another attempt is made to start the engine (steps SP300 to SP330). On the other hand, if N is larger than a (No in step SP330), the CPU 310 sends a failure signal via the communication unit 350 (step SP340). At this time, the CPU 310 generates a new ID code (step SP440 in Fig. 6), and sends the old ID code and the new ID code together with the failure signal (step SP450).

In the wearable computer, when an acceptance signal or an engine-start rejection signal is received (step SP350 in Fig. 7, and step SP500 in Fig. 6), the CPU 110 executes authentication of an old ID code attached to the signal (step SP510). More specifically, the CPU 110 compares the old ID code attached to the signal with the ID code of the wearable computer, stored in the ROM 120. If the ID codes match, the CPU 110 determines that the old ID code is valid, and establishes a connection (step SP520). On the other hand, if the ID codes do not match, the CPU 110 determines that the old ID code is not valid, and rejects connection (step SP530).

If the old ID code is valid, the CPU 110 writes the new ID code to the ROM 120 (step SP540), and displays a message that reads "accepted" or "rejected" on the display panel 140 (step SP360). It is possible to overwrite the old ID code with the new ID code as required.

The new ID code is read when the CPU 110 sends a predetermined command signal to the automobile next time, and is written at the beginning of the signal that is sent (steps SP550 to SP570).

When a start signal or a failure signal is received (step SP370), the CPU 110 similarly executes authentication, and then displays a message that reads "Succeeded", "N-th failure", or "Starting failed" on the display panel 140 (step SP380).

The CPU 110 then displays the initial menu screen again (SP390).

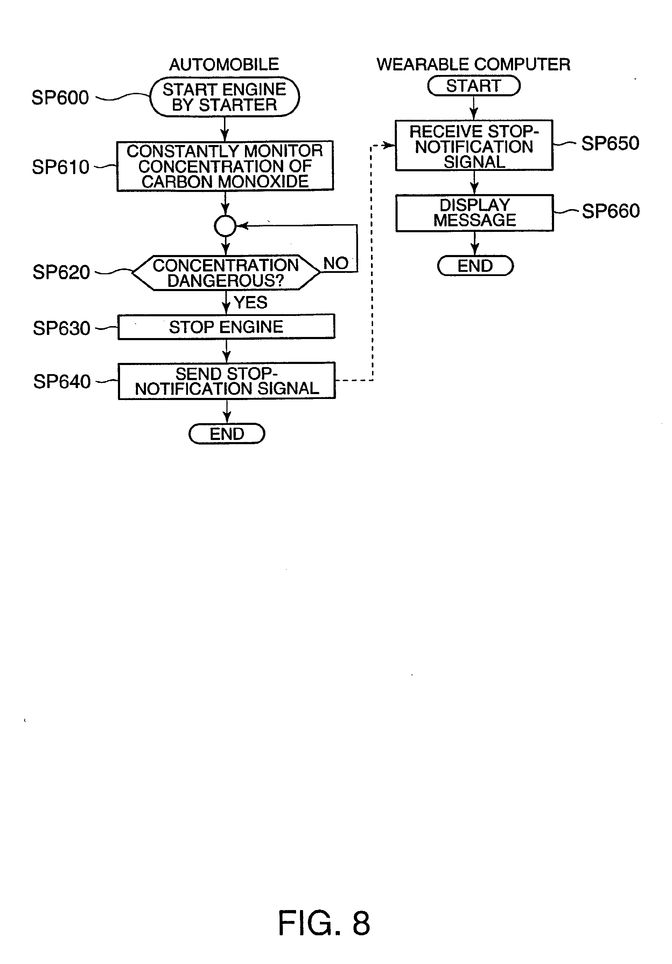

Fig. 8 is a flowchart showing a modification of this embodiment. When the engine is started in step SP300 shown in Fig. 7 (step SP600 in Fig. 8), the CPU 310 starts monitoring the in-vehicle and ambient concentration of carbon monoxide, output from the carbon monoxide sensors (step SP610). If the concentration of carbon monoxide exceeds a predetermined threshold value and reaches a dangerous level (Yes in step SP620), the CPU 310 stops the engine (step SP630), and sends via the communication unit 350 a stop-notification signal for notifying the wearable computer that the engine has been stopped (step SP640).

The wearable computer receives the stop-notification signal via the communication unit 150 (step SP650), and similarly executes authentication. Then, the wearable computer displays a message that reads "Engine is stopped because the concentration of carbon monoxide has reached a dangerous level. Please ventilate the air." on the display panel 140 (step SP660).

As described above, according to the automobile management system of this embodiment, information relating to the automobile as an object can be displayed on the wearable computer. Thus, advantageously, setting of the engine starter can be confirmed.

Furthermore, since authentication is executed when communications are carried out, advantageously, incorrect operation is prevented and security is enhanced.

Furthermore, since a user is notified of dangers, such as a high concentration of carbon monoxide, in a readily recognizable manner, advantageously, safety in starting the engine in a closed garage is improved.

### (2) Activating security

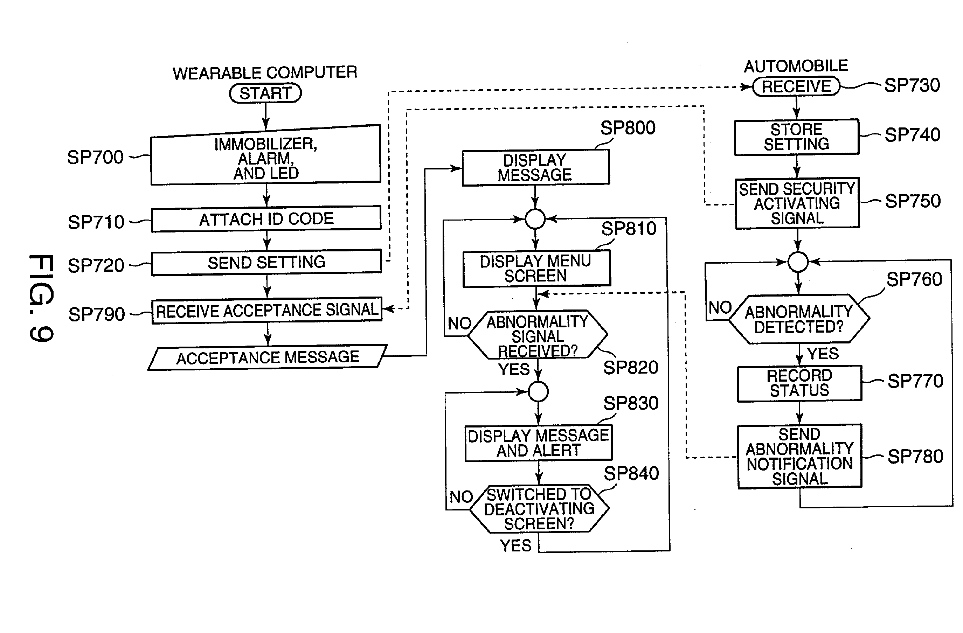

Fig. 9 is a flowchart showing processes for activating security, executed between the wearable computer and the automobile according to this embodiment.

When on/off of the immoblizer, the alarm, and the alarm LED are set in the wearable computer (step SP700 in Fig. 9), the CPU 110 writes the setting to the RAM 130. Furthermore, the CPU 110 adds a preset ID code to a security activation signal in which on/off of the immobilizer, the alarm, and the alarm LED, etc. are specified (step SP710), and sends the security activation signal to the automobile (step SP720).

In the automobile, the CPU 310 receives the security activation signal via the communication unit 350 (step SP400 in Fig. 6, and step SP730 in Fig. 9).

The CPU 310 executes authentication of the ID code attached to the security activation signal (step SP410). More specifically, the CPU 310 compares the ID code attached to the security activation signal with an ID code of the wearable computer, prestored in the ROM 320. If the ID codes match, the CPU 310 determines that the attached ID code is valid, and establishes connection (and also activates the security function unit 420 in this case) (step SP420). On the other hand, if the ID codes do not match, the CPU 310 determines that the attached ID code is not valid, and rejects connection (step SP430).

The CPU 310, when activating the security function unit 420, writes setting to the RAM 330 (step SP740 in Fig. 9), and sends an acceptance signal indicating acceptance of the engine starting signal to the wearable computer via the communication unit 350 (step SP750). At this time, the CPU 310 generates a new ID code (step SP440 in Fig. 6), and sends the old ID code and the new ID code together with the acceptance signal (step SP450).

Then, the CPU 310 issues an activation command to the security function unit 420. The security function unit 420 starts monitoring abnormal vibration of the automobile, abnormal opening/closing of a door, and abnormal start of the engine (step SP760).

When the security function unit 420 detects an abnormal state of the automobile, the security function unit 420 outputs information regarding a part relevant to the abnormal state to the CPU 310, and outputs a threatening sound, turns on the alarm LED, and controls the immobilizer. The CPU 310 writes status information including time to the RAM 330 together with the information regarding the abnormal part (step SP770), and sends an abnormality-notification signal via the communication unit 350 (step SP780).

Simultaneously with the transfer of the data, the GPS function unit 440 may be activated so that position information of the automobile will also be sent.

In the wearable computer, when the acceptance signal is received (step SP790), the CPU 110 similarly executes authentication of the old ID code attached to the acceptance signal (step SP510 in Fig. 6).

When the authentication of the old ID code succeeds, the CPU 110 writes a new ID code to the ROM 120 (step SP540), and displays messages that read, for example, "Immobilizer: ON", "Alarm: ON", and "Alert LED: ON" on the display panel 140 (step SP800). It is also possible to overwrite the old ID code with the new ID code.

Then, the CPU 110 displays the initial menu screen again (step SP810).

When the abnormality-notification signal is received (Yes in step SP820), the CPU 110 similarly executes authentication, and displays information regarding the part relevant to the abnormality, status information such as time of occurrence of the abnormality, and alarm messages that read "Abnormality occurred", "Door opened", and "Engine started" on the display panel 140 (step SP830). The CPU 110 continues displaying the alarm screen until the user notices the abnormality and operates the switching unit 160, and switches to a deactivation screen when the switch 160 is operated (step SP840).

As described above, according to the automobile management system of this embodiment, when an abnormal state arises in the automobile as an object, the type of abnormality (e.g., acceleration, vibration, sound) is recorded and then transferred to the wearable computer. Thus, advantageously, information that is useful for preventing automobile burglary or automobile theft is immediately provided to the user.

### (3) Activating a turbo timer

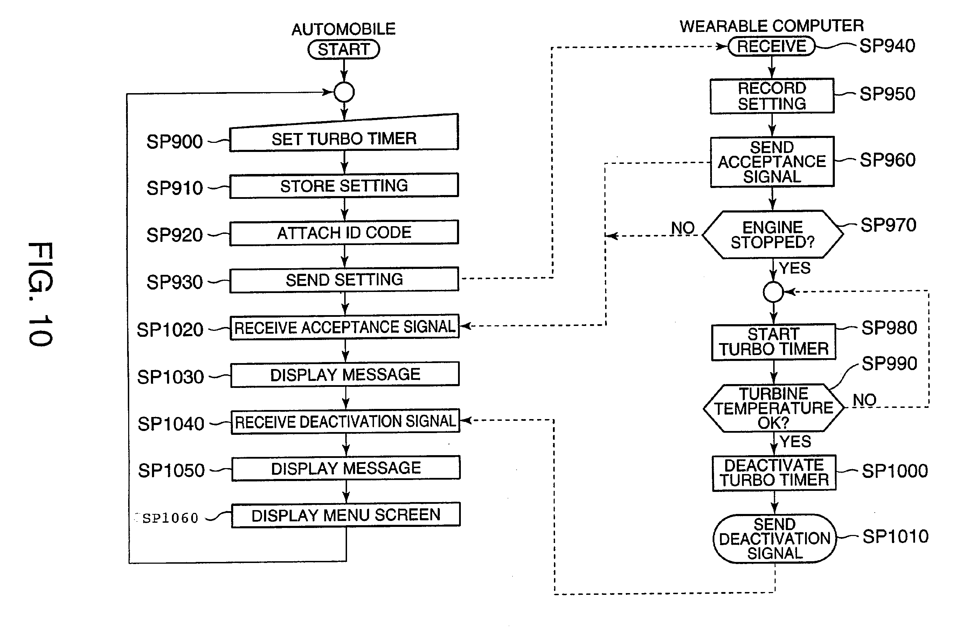

Fig. 10 is a flowchart showing processes for activating the turbo timer, executed between the wearable computer and the automobile according to this embodiment.

When a turbine temperature, etc. is set in the wearable computer (step SP900 in Fig.10), the CPU 110 writes the setting to the RAM 130 (step SP910). Furthermore, the CPU 110 adds a preset ID code to a turbo-timer setting signal in which on/off of the immobilizer, the alarm, and the alert LED, etc. is specified (step SP920), and sends the turbo-timer setting signal to the automobile (step SP930).

In the automobile, the CPU 310 receives the turbo-timer setting signal via the communication unit 350 (step SP400 in Fig. 6, and step SP940 in Fig. 10).

The CPU 310 executes authentication of the ID code attached to the turbo-timer setting signal (step SP410). More specifically, the CPU 310 compares the ID code attached to the turbo-timer setting signal with the ID code of the wearable computer, prestored in the ROM 320. If the ID codes match, the CPU 310 determines that the attached ID code is valid, and establishes connection (and also activates the starter function unit 430 in this case) (step SP420). On the other hand, if the ID codes do not match, the CPU 310 determines that the attached ID code is not valid, and rejects connection (step SP430).

The CPU 310, when activating the starter function unit 430, writes the setting to the RAM 330 (step SP950 in Fig. 10), and sends an acceptance signal indicating acceptance of the engine starting signal to the wearable computer via the communication unit 350 (step SP960). At this time, the CPU 310 generates a new ID code (step SP440 in Fig. 6), and sends the old ID code and the new ID code together with the acceptance signal (step SP450).

Then, the CPU 310 stops the engine (step SP970), and outputs an activation command to the starter function unit 430. The starter function unit 430 starts operation of the turbo timer (step SP980).

When the temperature indicated by the temperature sensor of the turbine drops below the preset value (Yes in step SP990), the starter function unit 430 stops the turbo timer, and notifies the CPU 310 of that effect (step SP1000).

When the notification of deactivation of the turbo timer is received, the CPU 310 sends a turbo-timer-deactivation notification signal via the communication unit 350 (step SP1010).

In the wearable computer, when the acceptance signal is received (step SP1020), the CPU 110 similarly executes authentication of the old ID code attached to the acceptance signal (step SP510 in Fig. 6).

If the authentication of the old ID code succeeds, the CPU 110 writes a new ID code to the ROM 120 (step SP540), and displays a message that reads, for example, "Turbo timer is in operation" on the display panel 140 (step SP1030). It is also possible to overwrite the old ID code with the new ID code.

When the turbo-timer-deactivation notification signal is received (Yes in step SP1040), the CPU 110 similarly executes authentication, and displays a message that reads, for example, "Turbo timer stopped" on the display panel 140 (step SP1050). Then, the CPU 110 displays the initial menu screen again (step SP1060).

As described above, according to the automobile management system of this embodiment, advantageously, the user can be notified as to whether the turbo timer in the automobile as an object has operated correctly.

### (4) Exchanging data regarding traveling-distance data and gasoline-amount data

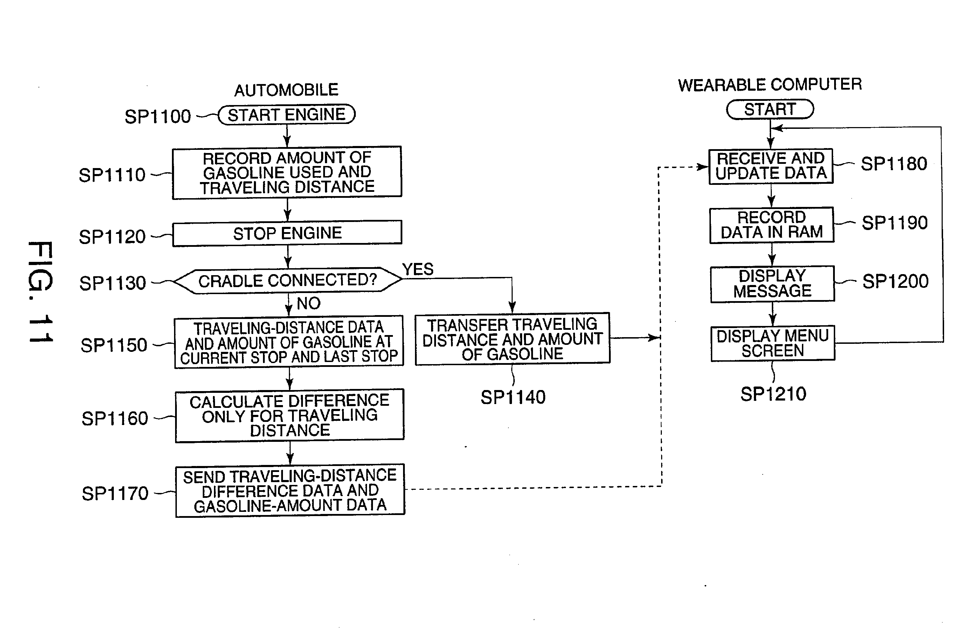

Fig. 11 is a flowchart showing processes for exchanging traveling-distance data and gasoline-amount data, executed between the wearable computer and the automobile according to this embodiment.

In the automobile, when the engine starts (step SP1100 in Fig. 11), the CPU 310 activates the traveling-data management unit 460. The traveling-data management unit 460 calculates data such as a traveling distance (total traveling distance), a mileage, the amount of gasoline used, and the remaining amount of gasoline based on data obtained from the sensors of the components of the automobile, and writes these items to the RAM 330 as required (step SP1110).

When the engine is stopped (step SP1120), the CPU 310 outputs a confirmation command for confirming that the wearable computer is physically connected to the communication unit 350 (a cradle in this embodiment).

If it is confirmed that the communication unit 350 is physically connected to the wearable computer (Yes in step SP1130), the CPU 310 sends traveling-distance data and gasoline-amount data to the wearable computer via the cradle (step SP1140).

On the other hand, if it is determined that the communication unit 350 is not physically connected to the wearable computer (No in step SP1130), the CPU 310 reads traveling-distance data at the time of the current stop and traveling-distance data at the time of last stop from the RAM 330 (step SP1150), calculates the difference therebetween (step SP1160), and sends the traveling-distance difference data and the gasoline-amount data to the wearable computer via the communication unit 350 (step SP1170).

In the wearable computer, when the traveling-distance data and the gasoline-amount data are received (step SP1180), the CPU 110 overwrites and updates traveling-distance data and gasoline-amount data stored in the RAM 130 (step SP1190). The CPU 110 then displays a message that reads, for example, "Odometer: 10,000 km" on the display panel 140 (step SP1200).

Furthermore, when the traveling-distance difference data and the gasoline-amount data are received (step SP1180), the CPU 110 adds the traveling-distance difference data received to the traveling-distance data stored in the RAM 130, and writes the resulting traveling-distance data and the gasoline-amount data to the RAM 130 (step SP1190). The CPU 110 then displays a message that reads, for example, "Odometer: 10,000 km" on the display panel 140 (step SP1200).

Then, the CPU 110 displays the initial menu screen again (step SP1210).

As described above, according to the automobile management system of this embodiment, when the wearable computer carries out wireless communications, advantageously, only difference data is transmitted, so that the amount of data transmitted is reduced.

If data communications are carried out via a cradle, traveling-distance data is transferred as it is, advantageously, error that could occur by transferring only difference data is avoided.

### (5) Exchanging mileage data and tripmeter data

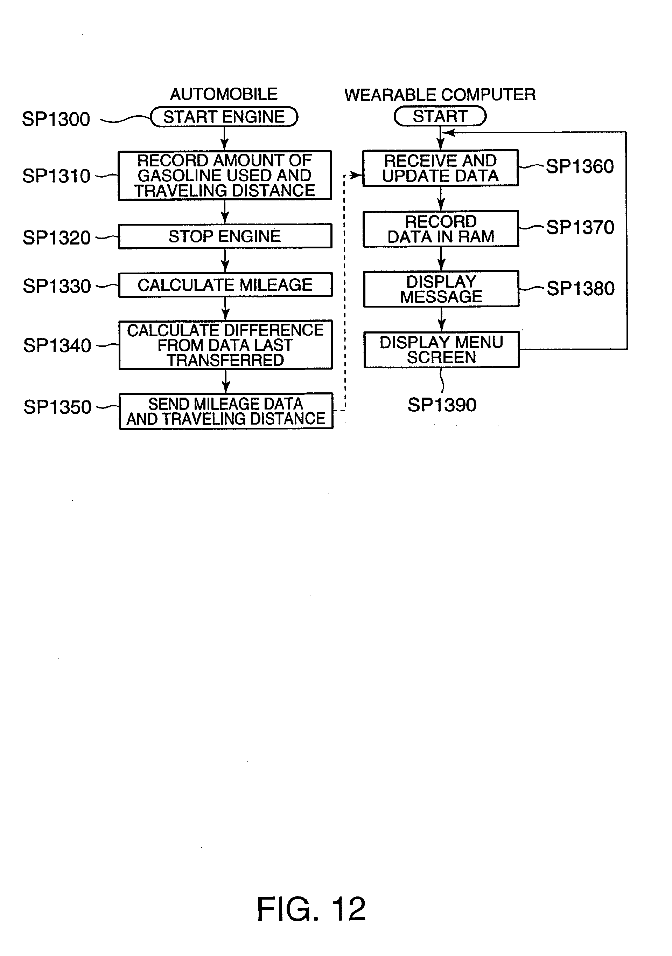

Fig. 12 is a flowchart showing processes for exchanging traveling-distance data and gasoline-amount data, executed between the wearable computer and the automobile according to this embodiment.

In the automobile, when the engine is started (step SP1300 in Fig. 12), the CPU 310 activates the traveling-data management unit 460. The traveling-data management unit 460 calculates data such as a traveling distance (tripmeter distance), mileage, the amount of gasoline used, and the remaining amount of gasoline based on data obtained from the sensors of the components of the automobile, and writes these items to the RAM 330 as required (step SP1310).

When the engine is stopped (step SP1320), the CPU 310 calculates a mileage (step SP1330), reads traveling-distance data of the tripmeter at the time of the current stop and traveling-distance data of the tripmeter at the time of last stop from the RAM 330, and calculates the difference therebetween (step SP1340). The CPU 310 then sends the traveling-distance difference data and the mileage data to the wearable computer via the communication unit 350 (step SP1350).

In the wearable computer, when the traveling-distance difference data of the tripmeter and the mileage data are received (step SP1360), the CPU 110 adds the received traveling-distance difference data of the tripmeter to traveling-distance difference data of the tripmeter, stored in the RAM 130, and writes the resulting traveling-distance data of the tripmeter and the mileage data to the RAM 130 (step SP1370). The CPU 110 then displays messages that read, for example, "Mileage: 10 km/l" and "Trip: 125 km" on the display panel 140 (step SP1380).

The CPU 110 then displays the initial menu screen again (step SP1390).

As described above, according to the automobile management system of this embodiment, when the wearable computer carries out wireless communications, only difference data is transmitted, so that the amount of data transmitted is reduced.

Furthermore, since the CPU 310 executes the entire calculations of the traveling-distance data of the tripmeter and the mileage data, the amount of data transferred is reduced.

### (6) Exchanging an engine-oil replacement message

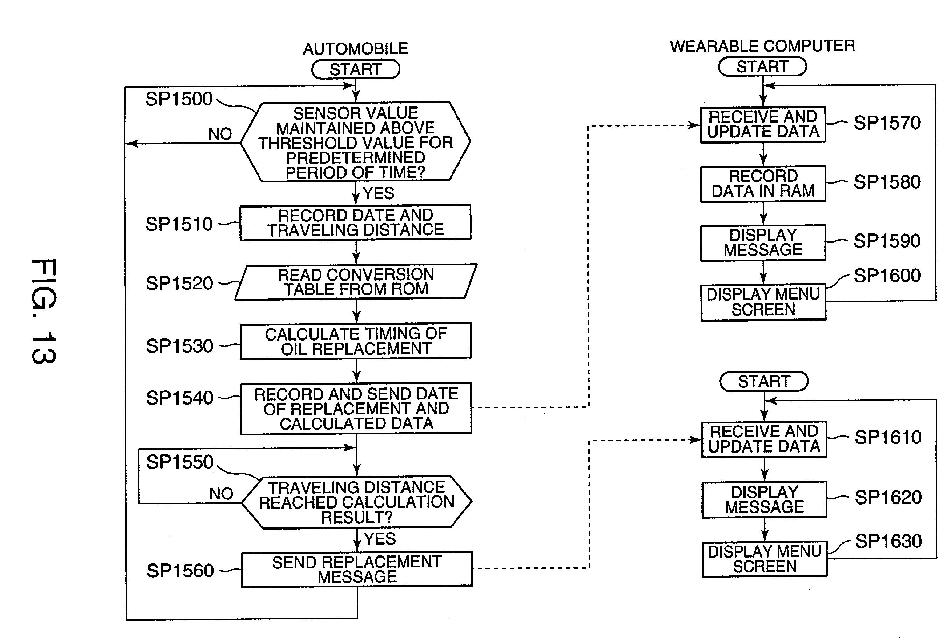

Fig. 13 is a flowchart showing processes for exchanging an engine-oil replacement message, executed between the wearable computer and the automobile according to this embodiment.

In the automobile, if the component-maintenance-information detecting sensor 470 (a level gauge sensor for engine oil, provided in an oil pan, is assumed herein) continuously outputs a value of oil level exceeding a predetermined threshold value for a predetermined period of time (step SP1500 in Fig. 13), the CPU 310 determines that oil has been replaced. The CPU 310 then obtains a traveling distance from the traveling-data management unit 460, and writes the traveling-distance, together with a date, to the RAM 330 (step SP1510).

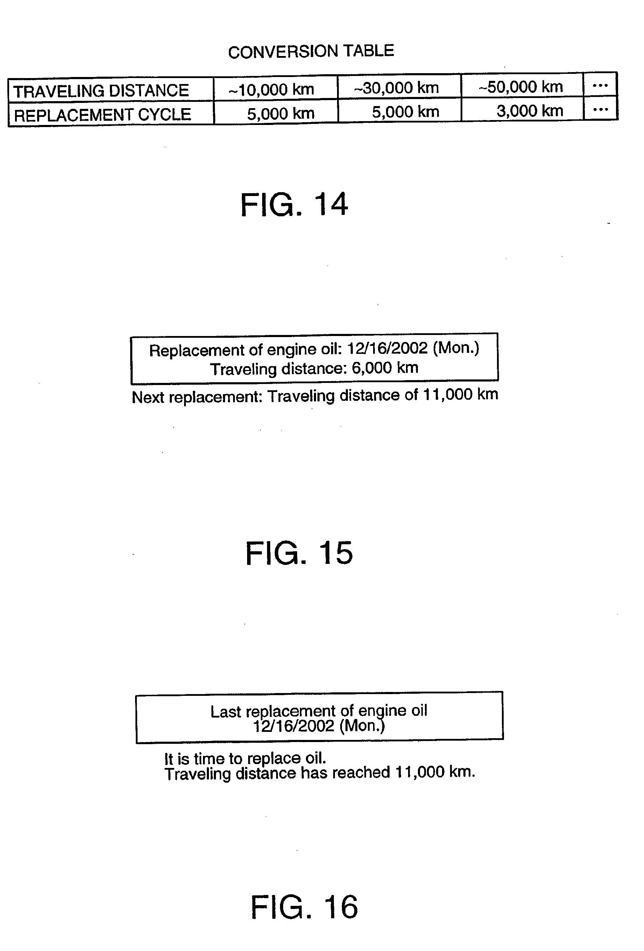

Then, the CPU 310 reads a conversion table shown in Fig. 14, prestored in the ROM 320 (step SP1520), calculates a timing of next oil replacement (traveling distance or date) (step SP1530), and sends the result together with the date when oil has been replaced to the wearable computer via the communication unit 350 (step SP1540).

Furthermore, the CPU 310 sends an oil replacement message when traveling time or date reaches the timing of next oil replacement (Yes in step SP1550).

In the wearable computer, when the timing of next oil replacement and the date when oil has been replaced are received (step SP1570), the CPU 110 writes the timing and the date to the RAM 130 (step SP1580). The CPU 110 then displays a replacement schedule message, for example, as shown in Fig. 15, on the display panel 140 (step SP1590).

Then, the CPU 110 displays the initial menu screen again (step SP1600).

Furthermore, when the replacement message is received (step SP1610), the CPU 110 displays a replacement recommendation message, for example, as shown in Fig. 16, on the display panel 140 (step SP1620).

Then, the CPU 110 displays the initial menu screen again (step SP1630).

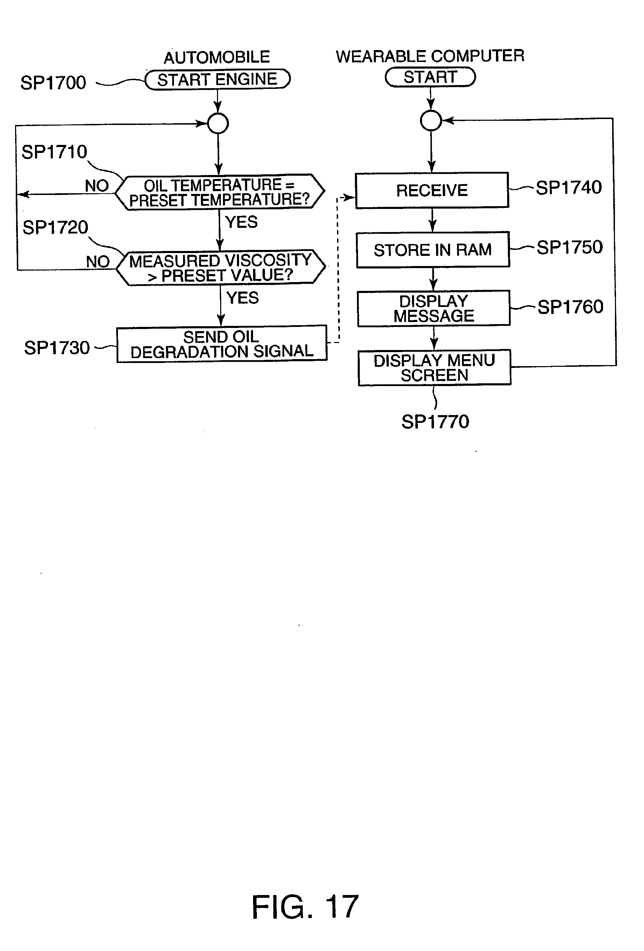

Fig. 17 is a flowchart showing a modification of this embodiment. In the automobile, when the engine is started (step SP1700) and the value of an oil temperature sensor reaches a preset value (Yes in step SP1710), if the component-maintenance-information detecting sensor 470 (a viscosity sensor for engine oil, provided in the oil pan, is assumed herein) outputs a viscosity larger than a preset parameter value prestored in the ROM 320 (Yes in step SP1720), the CPU 310 sends an oil degradation signal indicating degradation of oil to the wearable computer via the communication unit 350 (step SP1730).

In the wearable computer, when the oil degradation signal is received (step SP1740), the CPU 110 writes the oil degradation signal to the RAM 130 (step SP1750). The CPU 110 then displays a replacement schedule message that reads, for example, "Oil is degraded. Please replace oil." on the display panel 140 (step SP1760). At this time, a message that requests flushing may be displayed together.

Then, the CPU displays the initial menu screen again (step SP1770).

As described above, according to the automobile management system of this embodiment, since the CPU 310 executes the entire calculation of next timing of oil replacement in the wearable computer, the amount of data transferred and the amount of data that must be stored in the wearable computer are reduced.

### (7) Exchanging an engine flushing and oil-filter replacement message

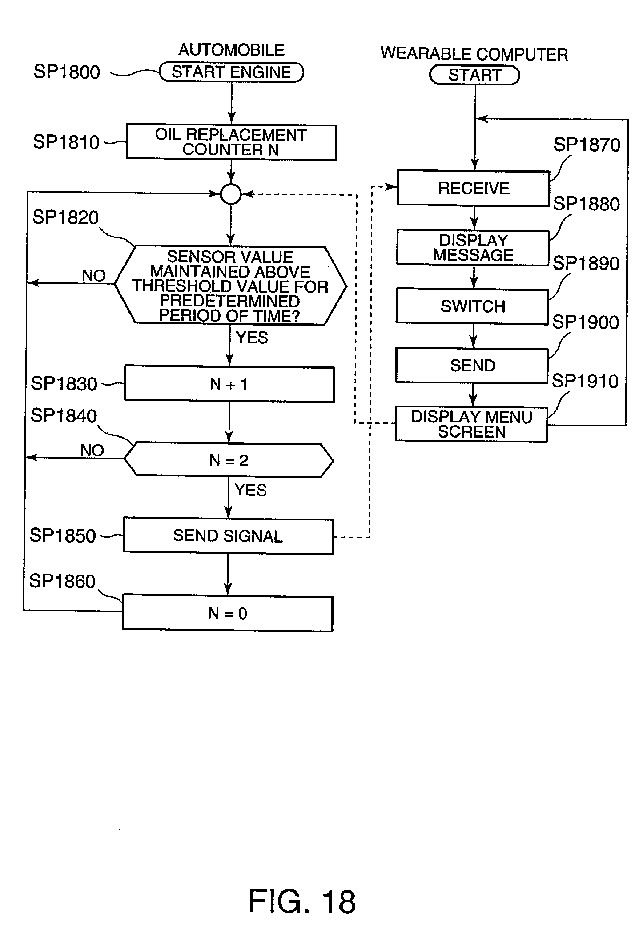

Fig. 18 is a flowchart showing processes for exchanging an engine oil replacement message, executed between the wearable computer and the automobile according to this embodiment.

In the automobile, when the engine is started (step SP1800 in Fig. 18), the CPU 310 reads the value N of an oil-replacement counter from the ROM 320 (step SP1810). If the value of oil level output by the component-maintenance-information detecting sensor 470 (a level gauge sensor for engine oil, provided in the oil pan, is assumed herein) is maintained above a threshold value for a predetermined period of time (Yes in step SP1820), the CPU 310 determines that oil has been replaced, and increments the value N by 1 (step SP1830). When the value N reaches 2 by being incremented (Yes in step SP1840), the CPU 310 sends a signal of a message that recommends flushing to the wearable computer via the communication unit 350 (step SP1850), and sets the value N to 0 (step SP1860).

In the wearable computer, when the message recommending flushing is received (step SP1870), the CPU 110 displays a message that reads "Flushing of the engine is needed. It is time to replace the oil filter." on the display panel 140 (step SP1880). When the user flushes the engine in accordance with the message and then operates the switching unit 160 (step SP1890), the CPU 110 sends a reset signal to the automobile (step SP1900). Then, the CPU 110 displays the initial menu screen again (step SP1910). As described above, according to the automobile management system of this embodiment, information useful for flushing of the engine of the automobile as an object can be provided to the user.

### (8) Exchanging an ATF (automatic transmission fluid) replacement message

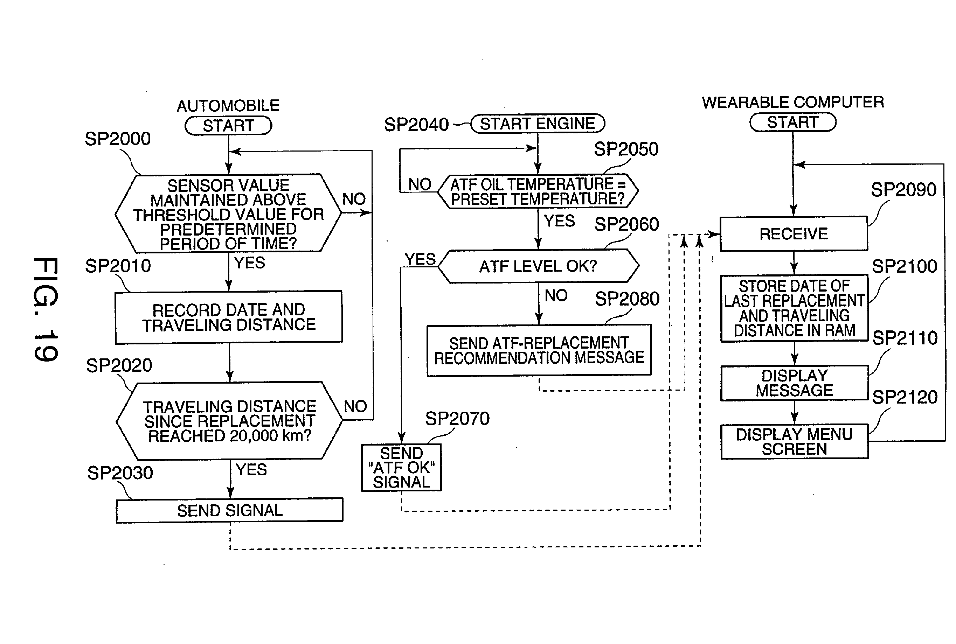

Fig. 19 is a flowchart showing processes for exchanging an ATF replacement message, executed between the wearable computer and the automobile according to this embodiment.

In the automobile, if the value of ATF level output by the component-maintenance-information detecting sensor 470 (an ATF level gauge sensor is assumed herein) is maintained above a threshold value for a predetermined period of time (Yes in step SP2000 in Fig. 19), the CPU 310 determines that ATF has been replaced. Then, the CPU 310 obtains a traveling distance from the traveling-data management unit 460, and writes the traveling distance, together with a date, to the RAM 330 (step SP2010).

Then, the CPU 310 reads the traveling distance at the time of last ATF replacement, previously stored in the ROM 320, and subtracts it from the traveling distance at the time of the current ATF replacement. If the resulting traveling distance is 20,000 km or larger (Yes in step SP2020), the CPU 310 sends a message recommending replacement of ATF to the wearable computer via the communication unit 350 (step SP2030).

When the engine is started (step SP2040) and the value of an ATF oil temperature sensor reaches a preset value (Yes in step SP2050), if the value output from the component-maintenance-information detecting sensor 470 (an ATF level gauge sensor is assumed herein) reaches a threshold value prestored in the ROM 320 (Yes in step SP2060), the CPU 310 sends a signal indicating that the ATF level is appropriate to the wearable computer via the communication unit 350 (step SP2070). On the other hand, if the value output from the component-maintenance-information detecting sensor 470 is smaller than the threshold value prestored in the ROM 320 (No in step SP2060), the CPU 310 sends a signal of a message recommending replacement of ATF to the wearable computer via the communication unit 350 (step SP2080).

In the wearable computer, when a signal indicating that the ATF level is appropriate is received (step SP2090), the CPU 110 writes the signal to the RAM 130 (step SP2100).

When a signal recommending replacement of ATF is received (step SP2090), the CPU 110 writes the signal to the RAM 130 (step SP2100). The CPU 110 then displays a message that reads "Please replace ATF." together with a date of last replacement and traveling distance on the display panel 140 (step SP2110).

Then, the CPU displays the initial menu screen again (step SP2120).

As described above, according to the automobile management system of this embodiment, after the engine of the automobile is started, the user can be notified of an appropriate timing of replacing ATF based on the amount of ATF and traveling distance.

### (10) Exchanging window-washer-fluid replacement message

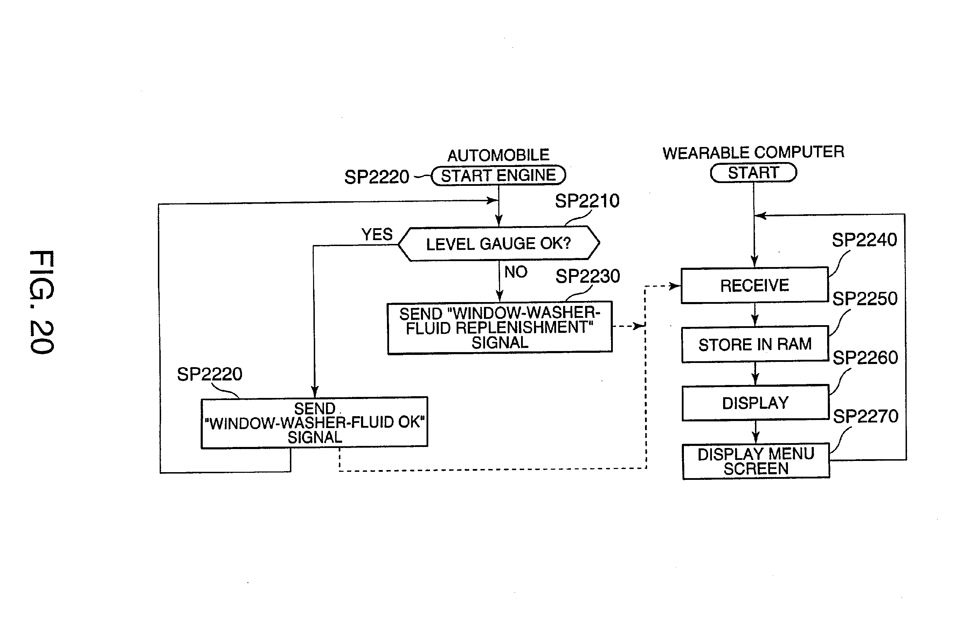

Fig. 20 is a flowchart showing processes for exchanging a window-washer-fluid replacement message, executed between the wearable computer and the automobile according to this embodiment.

In the automobile, when the engine is started (step SP2200), if the value of window-washer-fluid level, output by the component-maintenance-information detecting sensor 470 (a level gauge sensor for window washer fluid, provided in a reservoir tank for window washer fluid, is assumed herein) reaches a threshold value prestored in the ROM 320 (Yes in step SP2210), the CPU 310 sends a signal indicating that the level of window washer fluid is appropriate to the wearable computer via the communication unit 350 (step SP2220). On the other hand, if the value output by the component-maintenance-information detecting sensor 470 is smaller than the threshold value prestored in the ROM 320 (No in step SP2210), the CPU 310 sends a signal of a message recommending replenishment of window washer fluid to the wearable computer via the communication unit 350 (step SP2230).

In the wearable computer, when the signal indicating that the level of window washer fluid is appropriate is received (step SP2240), the CPU 110 writes the signal to the RAM 130 (step SP2250). The CPU 110 then displays a message that reads "Window washer fluid: OK" on the display panel 140 (step SP2260).

Then, the CPU 110 displays the initial menu screen again (step SP2270).

When the signal recommending replenishment of window washer fluid is received (step SP2240), the CPU 110 writes the signal to the RAM 130 (step SP2250). The CPU 110 then displays a message that reads "Please replenish window washer fluid." on the display panel 140 (step SP2260).

Then, the CPU 110 displays the initial menu screen again (step SP2270).

As described above, according to the automobile management system of this embodiment, advantageously, after the engine of the automobile as an object is started, the user is notified that window washer fluid must be replenished when the sensor indicates an abnormal state.

### (11) Exchanging a battery replacement message

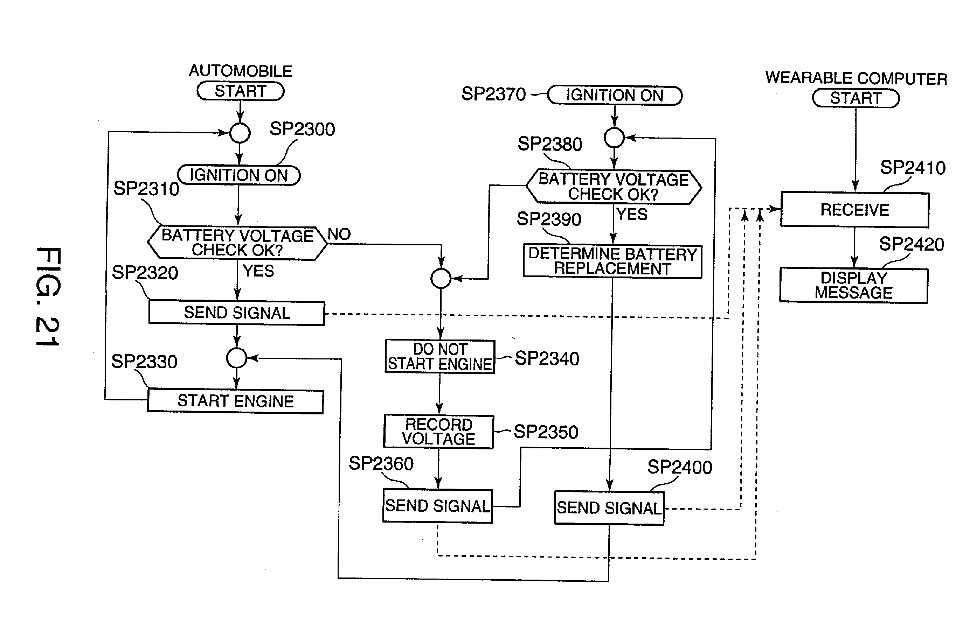

Fig. 21 is a flowchart showing processes for exchanging a battery replacement message, executed between the wearable computer and the automobile according to this embodiment.

In the automobile, when ignition is turned "ON" (step SP2300), if the value of voltage output by the component-maintenance-information sensor 470 (a voltage sensor provided at the battery is assumed herein) reaches a threshold value prestored in the ROM 320 (Yes in step SP2310), the CPU 310 sends a signal indicating that the battery voltage is normal to the wearable computer via the communication unit 350 (step SP2320).

After sending the signal, the CPU 310 starts the engine (step SP2330).

On the other hand, if the voltage value is smaller than the threshold value prestored in the ROM 320 (No in step SP2310), the CPU 310 does not start the engine (step SP2340), and writes the voltage value to the RAM 130 (step SP2350). Then, the CPU 310 sends a signal indicating that the engine cannot be started to the wearable computer via the communication unit 350 (step SP2360).

In the wearable computer, when the signal indicating that the battery voltage is normal is received (step SP2410), the CPU 110 displays a messages that reads "Battery: OK" on the display panel 140 (step SP2420).

When the signal indicating that the engine cannot be started is received (step SP2410), the CPU 110 displays messages that read "Battery: No good." and "The engine cannot be started." on the display panel 140 (step SP2420).

When the user replaces the battery in response to the messages displayed on the display panel 140, in the automobile, when the ignition becomes "ON" (step SP2370), and if the value of voltage output by the component-maintenance-information detecting sensor 470 reaches the threshold value prestored in the ROM 320 (Yes in step SP2380), the CPU 310 determines that the battery has been replaced (step SP2390), and sends a signal indicating that the battery has been replaced to the wearable computer via the communication unit 350 (step SP2400).

In the wearable computer, when the signal indicating that the battery has been replaced is received (step SP2410), the CPU 110 displays messages that read "Battery: OK" and "The battery has been replaced." on the display panel 140 (step SP2420).

As described above, according to the automobile management system of this embodiment, advantageously, in starting the engine of the automobile as an object, the user is notified that the battery must be replaced if the battery is in an abnormal state.

### 1. Configuration of a Third Embodiment

Next, a third embodiment of the present invention will be described with reference to the drawings.

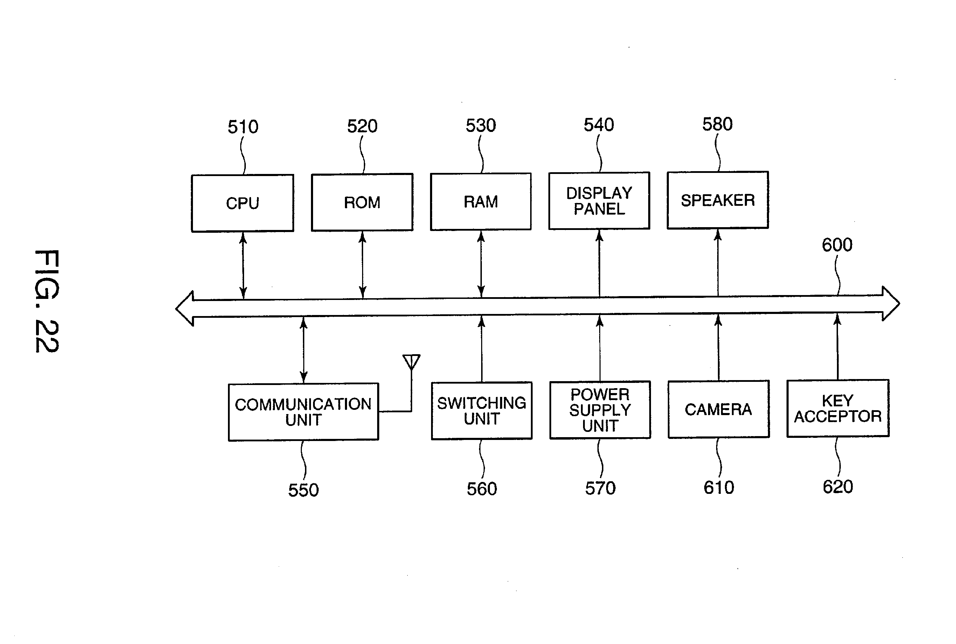

First, a dwelling management system according to this embodiment, employing a wearable computer, will be described. The dwelling management system according to this embodiment includes the wearable computer shown in Fig. 4 and a dwelling management apparatus shown in Fig. 22.

That is, this embodiment differs from the second embodiment in that an object of the wearable computer is the dwelling management apparatus in this embodiment. Hereinafter, descriptions of what is common with the second embodiment will be omitted, and what differs from the second embodiment will be described.

Now, dwelling management by the dwelling management system according to this embodiment will be described.

This embodiment will be described in the context of an example where the wearable computer is a key for a dwelling or the like.

Fig. 22 is a diagram showing the configuration of the dwelling management apparatus according to this embodiment. The dwelling management apparatus according to this embodiment includes a CPU 510, a ROM 520, a RAM 530, a display panel 540, a communication unit 550, a switching unit 560, a power supply unit 570, a speaker 580, a camera 610, and a key acceptor 620, and these components are connected to each other via a bus line 600.

The CPU 510 reads programs stored in the ROM 520 and writes the programs to the RAM 530, and executes the programs to control each of the components and to execute data calculation and processing. More specifically, the CPU 510 compares status information detected by a sensor (not shown) provided at a part of the dwelling, for example, at the key acceptor 620, with a determination-condition parameter prestored in the ROM 520, thereby determining whether the determination condition is satisfied. The CPU 510 then sends the result of the determination to the wearable computer.

The ROM 520 prestores a control program and parameters for the CPU 510.

The RAM 530 is used as a work memory for the CPU 510, and is implemented by a semiconductor memory that allows reading from and writing to an arbitrary address specified.

The display panel 540 is a display of the dwelling management apparatus according to this embodiment.

The communication unit 550 carries out data communications with the communication unit 150 of the wearable computer according to this embodiment.

The switching unit 560 is an operation unit that allows operations such as selection of content of display on the dwelling management apparatus.

The power supply unit 570 is a domestic power supply.

The speaker 580 is an audio output unit for outputting a threatening sound, an alarming buzzer, or the like.

The camera 610 is a CCD camera or the like for crime prevention, and it is an imaging unit that captures an image in response to a predetermined imaging command.

The key acceptor 620 has a mechanical lock mechanism and an electronic lock mechanism, and it is a security apparatus that detects abnormal vibration or abnormal signal to execute processes for preventing break-in.

### 2. Operation of the Third Embodiment

Now, operations of the wearable computer and the dwelling management apparatus in the dwelling management system according to this embodiment will be described with reference to the drawings.

### (1) Authentication and Unlocking

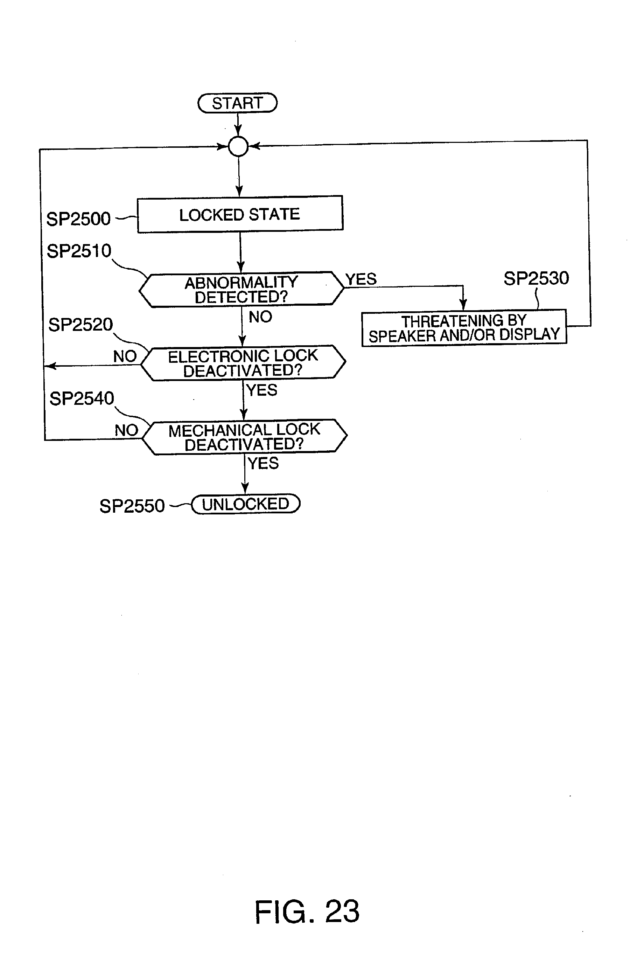

Fig. 23 is a flowchart showing processes for authentication and unlocking, executed between the wearable computer and the dwelling management apparatus according to this embodiment.

In the dwelling management apparatus, when the key acceptor 620 is set to a locked state (step SP2500 in Fig. 23), the CPU 510 writes a lock start time to the RAM 530, and sends the lock start time together with an old ID code and a new ID code to the wearable computer via the communication unit 550.

In the wearable computer, the CPU 110 receives the information via the communication unit 150 (step SP500 in Fig. 6).

The CPU 110 executes authentication of the old ID code attached to the lock start time (step SP510). More specifically, the CPU 110 compares the old ID code with an ID code of the wearable computer, prestored in the ROM 120. If the ID codes match, the CPU 110 determines that the old ID code is valid, and establishes connection (step SP520). If the ID codes do not match, the CPU 110 determines that the old ID code is not valid, and rejects connection (step SP530).

After establishing connection, the CPU 110 writes the new ID code and the locking time to the ROM 120 (step SP540).

When the sensor provided at the key acceptor 620 detects an abnormal vibration, the CPU 510 compares status information output by the sensor with a determination-condition parameter prestored in the ROM 520, thereby determining whether the determination condition is satisfied (step SP2510 in Fig. 23). The CPU 510 then sends the result of the determination to the wearable computer.

When the CPU 510 detects an abnormal state (Yes in step SP2510), the CPU 510 outputs an alarm sound signal or a threatening sound signal to the speaker 580, and the speaker 580 outputs a corresponding sound (step SP2530). The CPU 510 also displays an alert message on the display panel 540.

On the other hand, when the CPU 510 does not detect an abnormal state (No in step SP2510), the CPU 510 determines whether a key (i.e., the wearable computer) is placed in the key acceptor 620, and outputs a signal for requesting a lock time and an ID code to the key.

In the key, the CPU 110 receives the request signal via the communication unit 150, reads a lock time and a new ID code from the ROM 120, and outputs these items to the dwelling management apparatus via the communication unit 150.

Upon receiving the information, the CPU 510 determines whether the items match the lock time and the new ID code stored in the RAM 530. If they match, the CPU 510 deactivates the electronic lock (step SP2520).

After the electronic lock is deactivated, the user rotates the key to deactivate the mechanical lock (step SP2540).

As described above, according to the dwelling management system of this embodiment, advantageously, it can be shown to the outside that security is active, a lock time, confirmation of authentication, etc. can be displayed, and security can be enhanced.

### (2) Exchanging an image captured by a monitoring camera

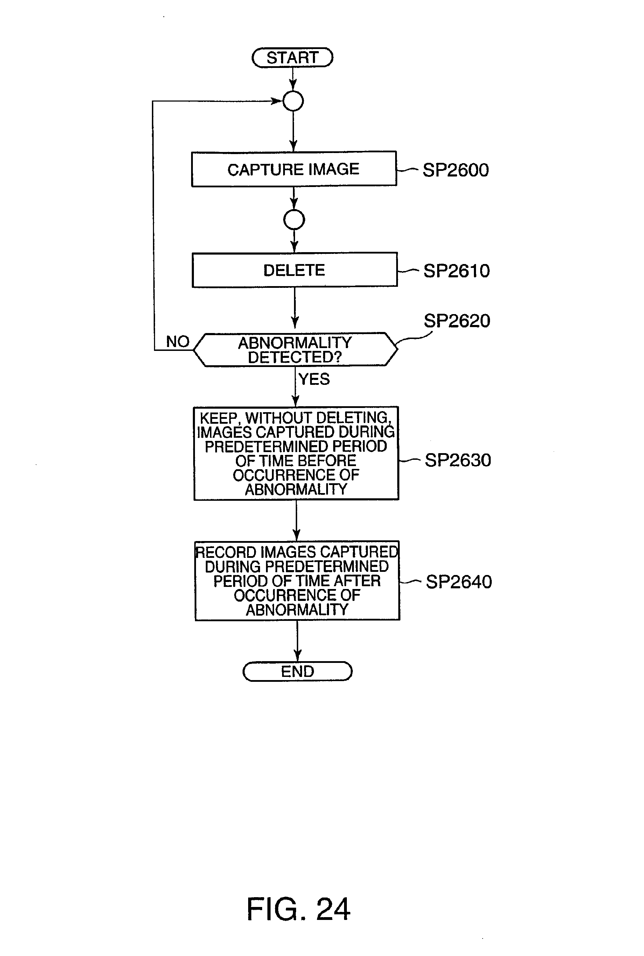

Fig. 24 is a flowchart showing processes for exchanging an image captured by a monitoring camera, executed between the wearable computer and the dwelling management apparatus according to this embodiment.

When the key acceptor 620 is set to a locked state in the dwelling management apparatus, the CPU 510 issues an imaging start command to the camera 610 provided at the entrance. The camera 610 starts imaging, deletes old image data captured previously at a predetermined cycle, and then captures an image again, repeating the procedure (steps SP2600 and SP2610 in Fig. 24).

When the sensor provided at the key acceptor 620 detects an abnormal vibration, the CPU 510 compares status information output by the sensor with a determination-condition parameter prestored in the ROM 520, thereby determining whether the determination condition is satisfied.

When an abnormal state is detected (Yes in step SP2620), the CPU 510 issues an image-data deletion halting command to the camera 610. The camera 610 halts deletion and continues imaging (steps SP2630 and SP2640). Furthermore, the CPU 510 sends the image captured to the wearable computer via the communication unit 550.

In the wearable computer, the CPU 110 receives the image via the communication unit 150, and displays the image on the display panel 140.

As described above, according to the dwelling management system of this embodiment, advantageously, when a notification is received at a security center and a security guard arrives, an image at the time of occurrence of an abnormal state can be confirmed on the display panel 540.

Although the present invention has been described in detail in the context of the embodiments with reference to the drawings, specific configurations are not limited to the embodiments, and other configurations are possible without departing from the scope of the present invention.

As described above, according to the present invention, information relating to an object can be displayed on display means.

Furthermore, an arrangement including means for issuing an alarm prevents an object from being left behind unlocked.

Furthermore, in an arrangement in which a rechargeable battery is charged while an object is active, the work of battery replacement or recharging is eliminated, serving to achieve simplicity of use.

## Claims

1. A key with display capability, comprising:
display means for displaying an image; and
receiving means for receiving information from an object that requires the key;
wherein information relating to the object is received from the object and displayed.

2. A key with display capability according to Claim 1, wherein the receiving means is capable of receiving a plurality of types of information and is therefore compatible with a plurality of types of objects.

3. A key with display capability according to Claim 2, wherein the display means displays an object-identifying image for identifying the plurality of types of objects, and displays an image other than the object-identifying image as required.

4. A key with display capability according to Claim 1, wherein the display means displays whether the object is unlocked or locked.

5. A key with display capability according to Claim 1, wherein the display means displays a time elapsed since locking.

6. A key with display capability according to Claim 1, wherein the display means displays an alert when the object satisfies a predetermined condition.

7. A key with display capability according to Claim 1, further comprising means for issuing an alarm, wherein the alarm is issued when the object is left behind unlocked.

8. A key with display capability according to Claim 1, wherein the display means displays current position data of the object or map data of an area around the object.

9. A key with display capability according to Claim 1, further comprising direction-detecting means for detecting a direction of the object, wherein data of the direction is displayed.

10. A key with display capability according to Claim 1, further comprising a rechargeable battery as a power source for allowing display by the display means,
wherein the rechargeable battery is charged while the object is active.

11. A display method for displaying an image on a key with display capability, wherein information relating to an object that requires the key is received from the object, and the information is displayed.

12. A display program for allowing a computer to execute processing for displaying an image on a key with display capability, the processing comprising:
a step of receiving information relating to an object that requires the key from the object; and
a step of displaying the information.

13. An automobile management system comprising a wearable computer and an automobile that carries out data communication with the wearable computer,
wherein the automobile comprises:
at least one sensor for detecting status information of at least one part of the automobile;
determination means for comparing the status information output by the sensor with a determination condition prestored in a storage unit, thereby determining whether the determination condition is satisfied; and
first communication means for sending a result of the determination to the wearable computer;
and wherein the wearable computer comprises:
second communication means for receiving the result of the determination from the automobile; and
display means for displaying predetermined information in accordance with the result of the determination received.

14. An automobile management system according to Claim 13, wherein the wearable computer further comprises alerting means for issuing a predetermined alert on behalf of the display means based on the result of the determination received.

15. An automobile management system according to Claim 13 or 14, wherein the automobile further comprises ID generating means for generating an ID code, the first communication means further sends the ID code generated by the ID generating means to the wearable computer, and the second communication means further receives the ID code, and sends the ID code together when sending data to the automobile.

16. A wearable computer that is used in an automobile management system including the wearable computer and an automobile that carries out data communication with the wearable computer, the wearable computer comprising:
communication means for receiving a result of a determination that is made by comparing status information of at least one part of the automobile, output by at least one sensor of the automobile, with a determination condition prestored in a storage unit; and
display means for displaying predetermined information in accordance with the result of the determination received.

17. An automobile comprising:
at least one sensor for detecting status information of at least one part of the automobile;
determination means for comparing the status information output by the sensor with a determination condition prestored in a storage unit, thereby determining whether the determination condition is satisfied; and
communication means for sending a result of the determination to a wearable computer having display means for displaying predetermined information in accordance with the result of the determination.

18. An automobile information management method for managing, using a wearable computer, status information of an automobile that carries out data communication with the wearable computer,
wherein the automobile detects status information of at least one part of the automobile, compares the status information with a determination condition prestored in a storage unit, thereby determining whether the determination condition is satisfied, and sends a result of the determination to the wearable computer,
and wherein the wearable computer receives the result of the determination from the automobile, and displays predetermined information in accordance with the result of the determination received.

19. An automobile information management program for allowing a wearable computer to execute processing for managing status information of an automobile that carries out data communication with the wearable computer, the processing comprising:
a communication step of receiving a result of a determination that is made by comparing status information output by at least one sensor of the automobile, the status information relating to a part of the automobile, with a determination condition prestored in a storage unit; and
a display step of displaying predetermined information in accordance with the result of the determination received.

20. A dwelling management system comprising a wearable computer and a dwelling management apparatus that carries out data communication with the wearable computer,
wherein the dwelling management apparatus comprises:
at least one sensor for detecting status information of a dwelling;
determination means for comparing the status information output by the sensor with a determination condition prestored in a storage unit, thereby determining whether the determination condition is satisfied; and
first communication means for sending a result of the determination to the wearable computer;
and wherein the wearable computer comprises:
second communication means for receiving the result of the determination from the dwelling management apparatus; and
display means for displaying predetermined information in accordance with the result of the determination received.

21. A wearable computer that is used in a dwelling management system including the wearable computer and a dwelling management apparatus that carries out data communication with the wearable computer, the wearable computer comprising:
communication means for receiving, from the dwelling management apparatus, a result of a determination that is made by comparing status information of at least one part of a dwelling, output by at least one sensor of the dwelling management apparatus, with a determination condition prestored in a storage unit; and
display means for displaying predetermined information in accordance with the result of the determination received.

22. A dwelling management method for carrying out dwelling management using a wearable computer and a dwelling management apparatus that carries out data communication with the wearable computer,
wherein the dwelling management apparatus detects status information of a dwelling, compares the status information of the dwelling with a determination condition prestored in a storage unit, thereby determining whether the determination condition is satisfied, and sends a result of the determination to the wearable computer,
and wherein the wearable computer receives the result of the determination from the dwelling management apparatus, and displays predetermined information in accordance with the result of the determination received.

23. A dwelling management program for allowing a wearable computer to execute processing for managing status information of a dwelling in a dwelling management system including the wearable computer and a dwelling management apparatus that carries out data communication with the wearable computer, the processing comprising:
a communication step of receiving, from the dwelling management apparatus, a result of a determination that is made by comparing status information of at least one part of the dwelling, output by at least one sensor of the dwelling management apparatus, with a determination condition prestored in a storage unit; and
a display step of displaying predetermined information in accordance with the result of the determination received.
